(19) **Europäisches Patentamt**
**European Patent Office**
**Office européen des brevets**

(11) **EP 4 617 853 B1**

(12) **FASCICULE DE BREVET EUROPEEN**

(45) Date de publication et mention
de la délivrance du brevet:
**29.04.2026 Bulletin 2026/18**

(21) Numéro de dépôt: **25162088.6**

(22) Date de dépôt: **06.03.2025**

(51) Classification Internationale des Brevets (IPC):
***G06F 7/72*** *(2006.01)*

(52) Classification Coopérative des Brevets (CPC):
**G06F 7/721;** G06F 2207/7238

(54) **PROCÉDÉ DE DÉTERMINATION D'UN INVERSE MODULAIRE, DISPOSITIF ÉLECTRONIQUE ET PROGRAMMES D ORDINATEUR ASSOCIÉS**

VERFAHREN ZUR BESTIMMUNG EINER MODULAREN INVERSE, ELEKTRONISCHE VORRICHTUNG UND COMPUTERPROGRAMME DAFÜR

METHOD FOR DETERMINING A MODULAR INVERSE, ASSOCIATED ELECTRONIC DEVICE AND COMPUTER PROGRAMS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.03.2024 FR 2402513**

(43) Date de publication de la demande:
**17.09.2025 Bulletin 2025/38**

(73) Titulaire: **Idemia France**
**92400 Courbevoie (FR)**

(72) Inventeur: **LESCUYER DE CHAPTAL-LAMURE, Roch Olivier**
**92400 COURBEVOIE (FR)**

(74) Mandataire: **Idemia**
**Service IP / IST**
**2, place Samuel de Champlain**
**92400 Courbevoie (FR)**

(56) Documents cités:
**WO-A1-2019/079048    US-A1- 2008 201 398**

• **CHONG HEE KIM ET AL: "How can we overcome both side channel analysis and fault attacks on RSA-CRT?", FAULT DIAGNOSIS AND TOLERANCE IN CRYPTOGRAPHY, 2007. FDTC 2007. WORKSHOP ON, IEEE, PISCATAWAY, NJ, USA, 1 September 2007 (2007-09-01), pages 21 - 29, XP031137887, ISBN: 978-0-7695-2982-0**

## Description

La présente invention concerne de manière générale le domaine du traitement cryptographique utilisant l'arithmétique modulaire.

Elle concerne plus particulièrement un procédé de détermination d'inverse modulaire, un procédé de génération de clé RSA CRT, ainsi qu'un programme d'ordinateur et un dispositif de traitement cryptographique associés. WO 2019/079048 A1 divulgue un exemple de calcul masqué d'un inverse modulaire.

Certains algorithmes de cryptographie, en particulier de cryptographie asymétrique tels que l'algorithme RSA (Rivest-Shamir-Adleman), utilisent les principes de l'arithmétique modulaire. La génération de clés cryptographiques, présentant des éléments publics et privés, est nécessaire préalablement au chiffrement ou à la signature de messages. La confidentialité des éléments privés doit être préservée.

L'algorithme RSA CRT (pour « Chinese Remainder Theorem » en terminologie anglo-saxonne) est une variante de l'algorithmes RSA qui utilise le Théorème des Restes Chinois pour accélérer les calculs.

En RSA CRT, les éléments privés comprennent :

- un nombre premier P,
- un autre nombre premier Q,
- un premier exposant de déchiffrement égal à un exposant secret modulo l'autre nombre premier diminué de un,
- un deuxième exposant de déchiffrement égal à l'exposant secret modulo le nombre premier diminué de un,
- un inverse modulaire C de l'autre nombre premier modulo le nombre premier : $C = Q^{-1} \bmod P$. L'observation d'un processeur mettant en œuvre un procédé de génération de clés, peut permettre de détecter des informations sur les données successivement manipulées et, après observation d'une ou plusieurs mises en œuvre du procédé, d'en déduire de l'information sur la valeur traitée.

La génération de l'inverse modulaire C doit donc être protégée contre de telles attaques, généralement nommées attaques par canal auxiliaire.

Malheureusement les solutions existantes ne permettent pas une protection satisfaisante de la génération de l'inverse modulaire.

Pour remédier à ces inconvénients, la présente invention propose selon un premier aspect, un procédé de détermination d'un inverse modulaire d'un nombre Q dans l'anneau des entiers modulo un module donné P, le nombre et le module donné étant des nombres premiers, le module donné étant masqué sous la forme de premières parties d'un masquage initial, le procédé étant mis en œuvre par un dispositif électronique et le procédé comprenant les étapes suivantes :

- Détermination , de préférence par tirage aléatoire, d'un premier masque multiplicatif et d'un deuxième masque multiplicatif non nuls et premiers entre eux,
- Détermination d'un autre module masqué par application du premier masque multiplicatif au module donné P,
- Détermination d'un nombre masqué égal au produit du deuxième masque multiplicatif et du nombre Q,
- Détermination d'un inverse multiplicatif de l'autre module masqué puis détermination d'un inverse intermédiaire D résultat d'une multiplication de l'inverse multiplicatif de l'autre module masqué par le premier masque multiplicatif modulo le nombre masqué,
- Détermination de deuxièmes parties d'un masquage additif modulaire d'un dividende, le dividende ayant pour valeur $(-D \cdot P + 1) \bmod N$ avec N un module public de valeur égale à $P \cdot Q$, et la détermination de chaque deuxième partie comprenant la détermination d'un produit de l'inverse intermédiaire et d'une troisième partie distincte d'un même masquage préliminaire du module donné,
- Calcul de la division exacte du dividende par le nombre, l'inverse modulaire étant le résultat de la division exacte, le dividende, l'inverse modulaire et le nombre étant manipulés sous forme masquée.

D'autres caractéristiques avantageuses et non limitatives du procédé conforme à l'invention, prises individuellement ou selon toutes les combinaisons techniquement possibles, sont les suivantes :

- le masquage initial est un masquage pami un masquage additif, un masquage additif modulaire, un masquage multiplicatif et un masquage multiplicatif modulaire ;
- le masquage préliminaire est un masquage additif ;
- les troisièmes parties sont les premières parties ;
- le procédé comprend en outre une étape de changement de masque pendant laquelle les troisièmes parties du masquage préliminaire du module donné sont déterminées à partir des premières parties du masquage initial dudit module donné ou à partir de l'autre module masqué et du premier masque multiplicatif ;
- la détermination d'une et une seule deuxième partie du dividende masqué comprend en outre une augmentation de 1 du produit déterminé modulo le module public ;
- la division exacte comprend le remplacement du masquage additif modulaire du dividende par un masquage additif ;
- le calcul de la division exacte manipule le nombre masqué et le deuxième masque multiplicatif, le deuxième masque multiplicatif étant impair ;
- le procédé comprend en outre e calcul du module public à partir du module donné et du nombre. Selon un deuxième aspect, l'invention propose un procédé de génération d'une clé RSA CRT comprenant un procédé tel que défini précédemment.

Selon un troisième aspect, l'invention propose un programme d'ordinateur comprenant des instructions exécutables par un processeur et adaptées à mettre en œuvre un procédé tel que défini précédemment, lorsque ces instructions sont exécutées par le processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Au moins une partie des procédés selon l'invention peut être mise en œuvre par ordinateur. En conséquence, la présente invention peut prendre la forme d'un mode de réalisation entièrement matériel ou d'un mode de réalisation combinant des aspects logiciels (comportant les microprogrammes, les logiciels résidents, les microcodes, etc.) et matériels qui peuvent tous être globalement appelés ici "bloc".

Selon un quatrième aspect, l'invention propose un dispositif électronique de détermination d'un inverse modulaire d'un nombre Q dans l'anneau des entiers modulo un module donné P, le nombre et le module donné étant des nombres premiers, le module donné étant masqué sous la forme de premières parties d'un masquage initial, et le dispositif électronique comprenant :

- un bloc de détermination de masques multiplicatifs configuré pour déterminer, de préférence par tirage aléatoire, un premier masque multiplicatif et un deuxième masque multiplicatif non nuls et premiers entre eux,
- un bloc de détermination d'un autre module masqué configuré pour déterminer un autre module masqué par application du premier masque multiplicatif au module donné P,
- un bloc de détermination d'un nombre masqué configuré pour déterminer un nombre masqué égal au produit du deuxième masque multiplicatif et du nombre Q,
- un bloc d'inversion configuré pour déterminer un inverse multiplicatif de l'autre module masqué puis déterminer un inverse intermédiaire D résultat d'une multiplication de l'inverse multiplicatif de l'autre module masqué par le premier masque multiplicatif modulo le nombre masqué,
- un bloc de détermination d'un dividende configuré pour déterminer des deuxièmes parties d'un masquage additif modulaire d'un dividende, le dividende ayant pour valeur $(-D \cdot P + 1)$ mod N avec N un module public de valeur égale à $P \cdot Q$, et la détermination de chaque deuxième partie comprenant la détermination d'un produit de l'inverse intermédiaire et d'une troisième partie distincte d'un même masquage préliminaire du module donné,
- un bloc de division exacte configuré pour calculer la division exacte du dividende par le nombre, l'inverse modulaire étant le résultat de la division exacte, le dividende, l'inverse modulaire et le nombre étant manipulés sous forme masquée.

Ce dispositif électronique peut être configuré pour la mise en œuvre de chacune des possibilités de réalisation envisagées pour les procédés tels que définis précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures :

La figure 1 représente schématiquement un mode de réalisation préféré d'un dispositif électronique selon l'invention ;

La figure 2 illustre sous forme de logigramme les étapes principales d'une comparaison sécurisée selon un mode d'implémentation, pour la mise en œuvre de l'invention ;

La figure 3 illustre sous forme de logigramme les étapes principales d'un procédé de détermination d'un inverse modulaire selon un premier mode de réalisation de l'invention ;

La figure 4 illustre sous forme de logigramme les sous-étapes principales d'une étape de calcul de division exacte sous forme masquée selon un premier mode de réalisation pour la mise en œuvre d'un procédé de détermination d'un inverse modulaire selon l'invention ;

La figure 5 illustre sous-forme de logigramme les sous-étapes principales d'une étape de calcul de division exacte sous forme masquée selon un deuxième mode de réalisation pour la mise en œuvre d'un procédé de détermination d'un inverse modulaire selon l'invention ;

La figure 6 illustre sous forme de logigramme les étapes principales d'un procédé de détermination d'un inverse modulaire selon un deuxième mode de réalisation de l'invention ;

La figure 7 illustre sous forme de logigramme les étapes principales d'un procédé de détermination d'un inverse modulaire selon un troisième mode de réalisation de l'invention ;

La figure 8 illustre sous forme de logigramme les étapes principales d'un procédé de détermination d'un inverse modulaire selon un quatrième mode de réalisation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Dans le cadre de la présente description, des qualificatifs « premier », « deuxième », « troisième », « quatrième », « cinquième », « sixième » ne sont qu'à titre indicatif pour distinguer des éléments qu'ils qualifient, mais n'impliquent pas d'ordre entre eux.

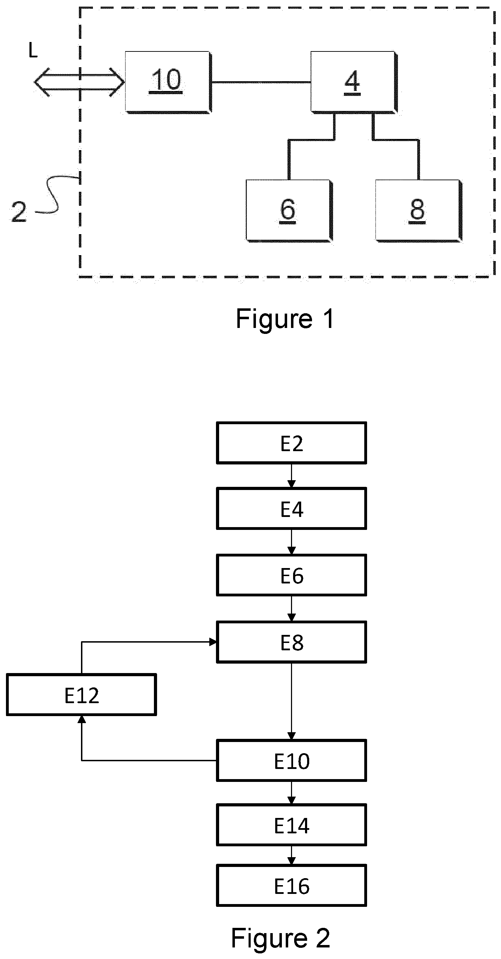

La figure 1 représente schématiquement un dispositif électronique 2 comprenant un processeur 4 (par exemple un microprocesseur), une entité de mémorisation 6, une mémoire vive 8 et une entité de communication 10.

La mémoire vive 8 et l'entité de mémorisation 6 sont chacune liées au processeur 4 de sorte que le processeur 4 peut lire ou écrire des données dans l'entité de mémorisation 6 et/ou la mémoire vive 8.

L'entité de mémorisation 6 mémorise des instructions de programme d'ordinateur, dont certaines sont conçues pour mettre en œuvre un procédé tel que décrit en référence à l'une des figures 2 à 8, lorsque ces instructions sont exécutées par le processeur 4.

L'entité de mémorisation 6 est par exemple un disque dur ou une mémoire non-volatile, éventuellement réinscriptible, par exemple de type EEPROM (pour "Electrically Erasable and Programmable Read-Only Memory" selon l'appellation anglo-saxonne couramment utilisée).

La mémoire vive 8 peut quant à elle mémoriser certains au moins des éléments (notamment un premier masque multiplicatif, un deuxième masque multiplicatif, des premières parties d'un masquage initial, un autre module masqué, un nombre masqué, un inverse multiplicatif, un inverse intermédiaire, des troisièmes parties d'un masquage préliminaire, des deuxièmes parties d'un masquage additif modulaire d'un dividende, et un inverse modulaire tel que décrits en référence au moins à une figure parmi les figures 2 à 8) manipulés lors des différents traitements effectués au cours d'un des procédés décrits ci-après.

On appelle mémoire dans la suite de la description, l'une quelconque parmi l'entité de mémorisation 6 et la mémoire vive 8.

Le dispositif électronique 2 comporte également plusieurs blocs (non représentés).

Typiquement, le dispositif électronique 2 comporte un bloc de détermination de masques multiplicatifs, un bloc de détermination d'un autre module masqué, un bloc de détermination d'un nombre masqué, un bloc d'inversion, un bloc de détermination d'un dividende et un bloc de division exacte. Le dispositif électronique 2 peut comporter en outre un bloc de détermination d'un module public et/ou un bloc de changement de masquage et/ou un bloc de génération de clé.

Ces blocs peuvent en pratique être réalisés par une combinaison d'éléments matériels et d'éléments logiciels.

Chaque bloc possède une fonctionnalité décrite dans l'un des procédés conformes à l'invention et décrit ci-après en référence aux figures 2 à 8. Ainsi, pour chaque bloc, le dispositif électronique 2 mémorise par exemple des instructions de logiciel exécutables par le processeur 4 du dispositif électronique 2 afin d'utiliser un élément matériel (par exemple une entité de communication ou une mémoire) et de mettre ainsi en œuvre la fonctionnalité offerte par le bloc.

Selon une possibilité de réalisation, les instructions de programme d'ordinateur mémorisées dans l'entité de mémorisation 6 ont par exemple été reçues (typiquement d'un ordinateur distant) lors d'une phase de fonctionnement du dispositif électronique 2 antérieure aux procédés décrits en référence aux figures 2 à 8.

L'entité de communication 10 est reliée au processeur 4 de manière à permettre au processeur 4 de recevoir des données en provenance d'un autre dispositif électronique (non représenté) et/ou d'émettre des données à destination d'un autre dispositif électronique (non représenté). Dans certains modes de réalisation, le processeur 4 peut ainsi recevoir une donnée L de l'autre dispositif électronique, par exemples les instructions de programme d'ordinateur et/ou une donnée d'entrée, et/ou émettre une donnée de sortie. Une donnée d'entrée est par exemple un message que le dispositif électronique 2 doit signer à l'aide d'une clé RSA CRT comprenant un inverse modulaire généré avec un procédé tel que décrit en référence aux figures 2 à 8. Une donnée de sortie est par exemple le résultat de ladite signature.

Le dispositif électronique 2 peut prendre de nombreuses formes (non représentées).

Selon un premier exemple, le dispositif électronique est une carte à puce, telle qu'une carte d'identité, une carte bancaire ou une carte à circuit intégré universelle (également connue sous le nom de carte UICC pour « Universal Integrated Circuit Card » en terminologie anglo-saxonne).

Dans ce cas, l'entité de communication 10 comprend par exemple des contacts affleurant sur une face de la carte à puce. En variante, l'entité de communication 10 pourrait être réalisée par un bloc de communication sans contact. De manière générale, l'entité de communication 10 peut être un bloc de communication filaire ou sans fil avec une autre entité électronique.

Selon un deuxième exemple, le dispositif électronique est un élément sécurisé, tel qu'un microcontrôleur sécurisé, qui est intégré à un autre dispositif électronique, typiquement un terminal de communication ou une voiture.

Selon d'autres exemples, le dispositif électronique est une clé usb, un téléphone mobile, un ordinateur personnel, un serveur ou un document d'identité, tel qu'un passeport électronique.

Comme on le verra par la suite, le dispositif électronique 2 est configuré pour déterminer un inverse modulaire d'un nombre Q dans l'anneau des entiers modulo un module donné P, le nombre et le module donné étant des nombres premiers, et le module donné étant masqué sous la forme de premières parties d'un masquage initial. Le dispositif électronique 2 peut en outre être configuré pour générer une clé RSA CRT comprenant l'inverse modulaire ainsi déterminé.

Selon un premier exemple, une quantité A est masquée additivement sur les entiers à n partages si elle est donnée sous la forme de n quantités $A_1, \ldots, A_n$ telle que l'équation suivante est satisfaite sur les entiers : $A_1 + \cdots + A_n = A$. Dans cet exemple, la quantité A est dite masquée sous la forme de n parties $A_1, \ldots, A_n$ d'un masquage additif.

Selon un deuxième exemple, une quantité A est masquée additivement modulo une quantité B à n partages si elle est donnée sous la forme de n quantités $A_1, \ldots, A_n$ telle que l'équation suivante est satisfaite : $A_1 + \cdots + A_n = A \bmod B$. Dans cet exemple, la quantité A est dite masquée sous la forme de n parties $A_1, \ldots, A_n$ d'un masquage additif modulaire de module B.

Selon un troisième exemple, une quantité A est masquée multiplicativement sur les entiers à 2 partages si elle est donnée sous la forme de 2 quantités $A_1, A_2$ telle que l'équation suivante est satisfaite: $A \cdot A_2 = A_1$. Dans cet exemple, la quantité A est dite masquée sous la forme de 2 parties $A_1, A_2$ d'un masquage multiplicatif.

Selon un quatrième exemple, une quantité A est masquée multiplicativement modulo une quantité B à 2 partages si elle est donnée sous la forme de 2 quantités $A_1, A_2$ telle que l'équation suivante est satisfaite: $A \cdot A_2 = A_1 \bmod B$. Dans ce cas, l'inverse de la quantité $A_2$ modulo la quantité B, est bien définie. Dans cet exemple, la quantité A est dite masquée sous la forme de 2 parties $A_1, A_2$ d'un masquage multiplicatif modulaire de module B.

Le masquage multiplicatif à n partages et le masquage multiplicatif modulaire à n partages, n étant supérieur ou égale à 3, sont d'autres exemples possibles mais ne sont pas privilégiés dans le contexte d'un algorithme RSA CRT.

Le masquage initial peut être un masquage pami un masquage additif, un masquage additif modulaire, un masquage multiplicatif et un masquage multiplicatif modulaire.

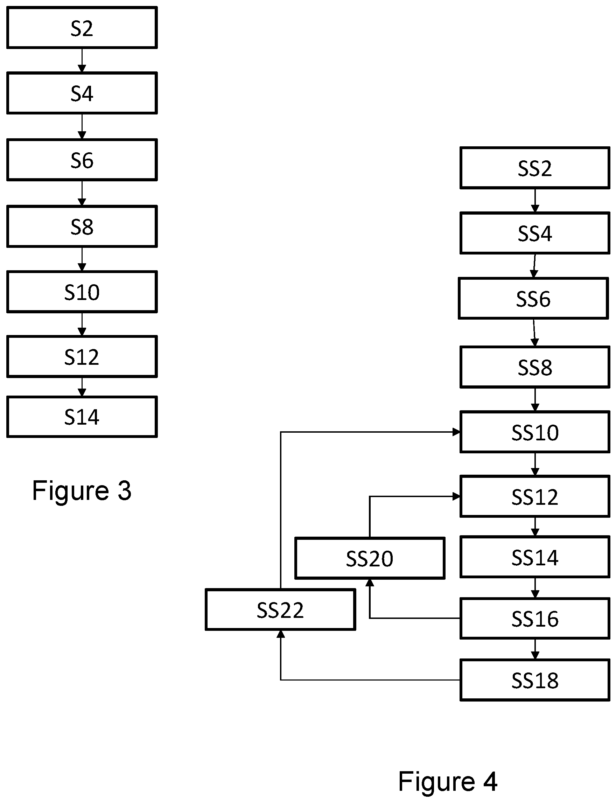

Dans les modes de réalisation de l'invention décrits ci-après en référence aux figures 3 à 8, la somme de n parties $A_1, \ldots, A_n$ d'un masquage additif modulaire d'une quantité A peut être comparée de manière sécurisée avec une autre quantité B.

La figure 2 illustre sous forme de logigramme les étapes principales d'une comparaison sécurisée selon un mode d'implémentation pour la mise en œuvre de l'invention. Plus précisément la figure 2 illustre les étapes principales d'une comparaison sécurisée d'une somme de n parties $A_1, \ldots, A_n$ d'un masquage additif modulaire d'une quantité A et d'une autre quantité B.

La taille de la quantité A est de a bits.

La comparaison sécurisée est ici mise en œuvre par le dispositif électronique 2 du fait de l'exécution des instructions de programme d'ordinateur mémorisées dans l'entité de mémorisation 6 comme indiqué ci-dessus.

Selon une étape de détermination d'un aléa (étape E2), le processeur 4 détermine un aléa F par tirage aléatoire, c'est-à-dire par tirage véritablement aléatoire ou par tirage pseudo-aléatoire, dans un intervalle fermé ayant une borne inférieure de valeur 0 et une borne supérieure de valeur $2^{a+o} - 1$ avec o un entier de sécurité. L'entier de sécurité a de préférence une valeur non nulle, par exemple 80.

La comparaison sécurisée comprend alors une étape de calcul d'une première donnée intermédiaire (étape E4), pendant laquelle le processeur 4 calcule une première donnée intermédiaire $G_1$ comme suit : $G_1 = A_1 + F$.

La comparaison sécurisée comprend alors une étape d'initialisation d'un index (étape E6), pendant laquelle le processeur 4 initialise un entier i à la valeur 2.

La comparaison sécurisée comprend alors une étape de mise à jour de la première donnée intermédiaire (étape E8), pendant laquelle le processeur 4 met à jour la première intermédiaire $G_1$ comme suit : $G_1 = G_1 + A_i$.

Le processeur 4 détermine ensuite, à une étape de test (étape E10), si l'entier i a atteint la valeur n. Dans la négative, l'entier i est incrémenté de 1 dans une étape d'incrémentation (étape E12) et le processeur 4 boucle à l'étape de mise à jour de la première donnée intermédiaire (étape E8).

Ainsi l'implémentation de la comparaison sécurisée met en œuvre n - 1 itérations de l'étape de mise à jour de la première donnée intermédiaire (étape E8).

Dans l'affirmative à l'étape de test (étape E10), le processeur 4 calcule, à une étape de calcul d'une deuxième donnée intermédiaire (étape E14), une deuxième donnée intermédiaire $G_2$ comme suit : $G_2 = B + F$.

La comparaison sécurisée comprend alors une autre étape de test (étape E16), pendant laquelle le processeur 4 détermine si la première donnée intermédiaire est strictement inférieure à la deuxième donnée intermédiaire. Pendant cette autre étape de test, le processeur 4 peut directement comparer la première donnée intermédiaire à la deuxième donnée intermédiaire.

Si la première donnée intermédiaire est strictement inférieure à la deuxième donnée intermédiaire, cela indique que le résultat de la somme des n parties $A_1, \ldots, A_n$ du masquage additif modulaire de la quantité A est strictement inférieure à l'autre quantité B.

Après la dernière itération de l'étape de mise à jour de la première donnée intermédiaire (étape E8), la première donnée intermédiaire a pour valeur

$$F + \sum_{i=1}^{n} A_i = F + A.$$

Pendant l'autre étape de test, déterminer si la première donnée intermédiaire est strictement inférieure à la deuxième donnée intermédiaire revient donc à déterminer si F + A est strictement inférieure à F + B, c'est-à-dire à déterminer si A est strictement inférieur à B. Cependant, la quantité A n'est pas manipulée en tant que telle pendant cette étape et les autres étapes de la comparaison sécurisée, ce qui préserve la confidentialité de la quantité A. L'aléa F permet d'assurer la confidentialité de la quantité A.

Un homme du métier comprendra que les étapes de la comparaison sécurisée, peuvent être exécutées selon d'autres ordres dans la mesure où chaque étape dispose des éléments nécessaires à son exécution.

Par exemples, l'étape de calcul d'une deuxième donnée intermédiaire (étape E14) peut être exécutée avant l'étape de calcul d'une première donnée intermédiaire (étape E4) ou avant l'étape d'initialisation d'un index (étape E6) ou avant l'étape de mise à jour de la première donnée intermédiaire (étape E8), mais après l'étape de détermination d'un aléa (étape E2).

La comparaison sécurisée décrite en référence à la figure 2 exécute les tours, c'est-à-dire les itérations, de la boucle avec un index qui s'incrémente à chaque tour. L'homme du métier comprendra que l'index de la boucle peut être géré différemment tant que toutes les valeurs de l'index sont parcourues en exécutant les tours de ladite boucle.

Typiquement, le procédé peut être adapté pour faire les n - 1 itérations de l'étape de mise à jour de la première donnée intermédiaire (étape E8) dans un ordre différent, chaque itération utilisant une valeur différente de l'entier, comprise entre 2 et n. Par exemple, l'homme du métier peut initialiser l'entier avec la valeur n dans l'étape d'initialisation d'index (étape E6), remplacer l'étape d'incrémentation (étape E12) par une étape de décrémentation qui décrémente l'entier i de 1, et déterminer à l'étape de test (étape E10), si l'entier i a atteint la valeur 2.

L'homme du métier comprendra également que la mise en œuvre de l'étape de calcul d'une première donnée intermédiaire (étape E4), et les mises en œuvre de l'étape de mise à jour de la première donnée intermédiaire (étape E8), peuvent être gérées différemment pour obtenir la valeur finale de la première donnée intermédiaire, en sommant chaque partie du masquage additif modulaire de la quantité A et l'aléa F, l'aléa F étant ajouté à la valeur courante de la première donnée intermédiaire avant que toutes les parties du masquage additif modulaire le soit.

La figure 3 illustre sous forme de logigramme les étapes principales d'un procédé de détermination d'un inverse modulaire selon un premier mode de réalisation de l'invention.

Le procédé de la figure 3 vise à déterminer un inverse modulaire d'un nombre Q dans l'anneau des entiers modulo un module donné P, le nombre et le module donné étant des nombres premiers, et le module donné étant masqué sous la forme de n premières parties d'un masquage initial avec n un entier strictement supérieur à un. Le masquage initial est ici un masquage additif.

Le procédé de la figure 3 est ici mis en œuvre par le dispositif électronique 2 du fait de l'exécution des instructions de programme d'ordinateur mémorisées dans l'entité de mémorisation 6 comme indiqué ci-dessus.

La tailles du module donné P est de p bits et la taille du nombre Q est de q bits. Par exemple p a pour valeur 1024 et q a aussi pour valeur 1024. On notera cependant que p peut avoir une valeur différente de celle de q.

Selon une étape de détermination de masques multiplicatifs (étape S2), le processeur 4 détermine un premier masque multiplicatif R et un deuxième masque multiplicatif S non nuls et premiers entre eux.

Le premier masque multiplicatif R a une taille r, respectivement le deuxième masque multiplicatif S a une taille s, qui est de préférence au moins la taille d'un mot.

Le mot est également appelé mot machine. Le mot est une unité de base manipulée par le processeur 4. La taille d'un mot est par exemple de 8 bits, 16 bits, 32 bits, 64 bits ou 128 bits.

La taille r du premier masque multiplicatif R, respectivement la taille s du deuxième masque multiplicatif S, est par exemple de 80 bits.

La taille r du premier masque multiplicatif R peut être différente de la taille s du deuxième masque multiplicatif S.

De préférence, la taille r du premier masque multiplicatif R et la taille s du deuxième masque multiplicatif S sont identiques.

La détermination du premier masque multiplicatif R et du deuxième masque multiplicatif S est de préférence par tirage aléatoire, c'est-à-dire par tirage véritablement aléatoire ou par tirage pseudo-aléatoire.

Typiquement, le processeur 4 tire un premier aléa uniformément dans un intervalle fermé ayant une borne inférieure de valeur 1 et une borne supérieure de valeur $2^s-1$, le deuxième masque multiplicatif étant le premier aléa. Ensuite le processeur 4 tire un deuxième aléa uniformément dans un intervalle fermé ayant une borne inférieure de valeur 1 et une borne supérieure de valeur $2^r-1$ et recommence cette opération jusqu'à ce que le plus grand diviseur commun du premier aléa et du deuxième aléa soit égal à 1. Le premier masque multiplicatif est le deuxième aléa quand le plus grand diviseur commun du premier aléa et du deuxième aléa est égal à 1.

Selon une variante d'implémentation, le deuxième masque multiplicatif peut avoir été enregistré dans une mémoire du dispositif électronique 2 lors d'une phase de fonctionnement du dispositif électronique 2 antérieure au procédé décrit ici. La détermination du deuxième masque multiplicatif S est alors par lecture d'une mémoire du dispositif électronique 2. Pour déterminer le premier masque multiplicatif, le processeur 4 peut tirer un aléa uniformément dans l'intervalle fermé ayant la borne inférieure de valeur 1 et la borne supérieure de valeur $2^r$-1, et recommencer cette opération jusqu'à ce que le plus grand diviseur commun du deuxième masque multiplicatif et du deuxième aléa soit égal à 1. Le premier masque multiplicatif est le deuxième aléa quand le plus grand diviseur commun du deuxième masque multiplicatif et du deuxième aléa est égal à 1.

Le procédé comprend alors une étape de détermination d'un autre module masqué (étape S4), pendant laquelle le processeur 4 détermine un autre module masqué $P_{(R)}$ par application du premier masque multiplicatif R au module donné P.

Typiquement, le processeur 4 calcule l'autre module masqué $P_{(R)}$ comme suit :

$$P_{(R)} = \sum_{j=1}^{n}(P_j \cdot R)$$ avec $P_j$ les premières parties.

Selon une étape de détermination d'un nombre masqué (étape S6), le processeur 4 détermine un nombre masqué $Q_{(S)}$ égal au produit du deuxième masque multiplicatif S et du nombre Q.

Le nombre masqué peut être déterminé par lecture d'une mémoire du dispositif électronique 2, par exemple si le nombre masqué a été préalablement déterminé puis mémorisé dans l'entité de mémorisation 6. Cette mise en œuvre peut être avantageuse si le deuxième masque multiplicatif a aussi été enregistré dans une mémoire du dispositif électronique 2 lors d'une phase de fonctionnement dudit dispositif électronique 2, antérieure au procédé décrit ici.

Le nombre masqué peut être déterminé par calcul, par exemple si le nombre Q est masqué sous la forme de quatrièmes parties d'un autre masquage initial, les quatrièmes parties ayant préalablement été déterminées puis mémorisées dans l'entité de mémorisation 6. L'autre masquage initial peut être un masquage pami un masquage additif, un masquage additif modulaire, un masquage multiplicatif et un masquage multiplicatif modulaire.

Typiquement, quand l'autre masquage initial est un masquage additif à m partages, le processeur 4 calcule le nombre masqué $Q_{(s)}$ comme suit :

$$Q_{(S)} = \sum_{j=1}^{m}(Q_j \cdot S)$$ avec $Q_j$ les quatrièmes parties.

De préférence, l'autre masquage initial est un masquage additif à n partages, c'est-à-dire que m est égal à n.

Le procédé comprend alors une étape de détermination d'un inverse multiplicatif (étape S8) pendant laquelle le processeur 4 détermine un inverse multiplicatif $P_{(R)}^{-1}$ de l'autre module masqué, typiquement par calcul à partir de l'autre module masqué $P_{(R)}$.

Le procédé se poursuit avec une étape de détermination d'un inverse intermédiaire (étape S10) pendant laquelle le processeur 4 détermine un inverse intermédiaire D résultat d'une multiplication de l'inverse multiplicatif de l'autre module masqué par le premier masque multiplicatif modulo le nombre masqué. Typiquement le processeur 4 calcule l'inverse intermédiaire comme suit : $D = \left(P_{(R)}^{-1}\right) \cdot R \bmod Q_{(S)}$ .

Le procédé comprend alors une étape de détermination de deuxièmes parties d'un masquage additif modulaire d'un dividende (étape S12), pendant laquelle le processeur 4 détermine des deuxièmes parties d'un masquage additif modulaire d'un dividende, le dividende ayant pour valeur (-D · P + 1) mod N avec N un module public de valeur égale à P · Q, et la détermination de chaque deuxième partie comprenant la détermination d'un produit de l'inverse intermédiaire et d'une troisième partie distincte d'un même masquage préliminaire du module donné.

Typiquement, tout i allant de 1 à n, le processeur 4 calcule une deuxième partie $T_i$ d'un masquage additif modulaire d'un dividende T comme suit : $T_i = -D \cdot P_i + H_i$ mod N tel que $\sum_{i=1}^{n} H_i \bmod N = 1$ . Dans cet exemple, les troisièmes parties sont les premières parties. Autrement dit, le masquage préliminaire est le masquage initial. La détermination de chaque deuxième partie $T_i$ comprend donc la détermination d'un produit $D \cdot P_i$ de l'inverse intermédiaire D et d'une troisième partie distincte $P_i$ d'un même masquage préliminaire du module donné P, c'est-à-dire du masquage préliminaire du module donné P. Le masquage additif modulaire du dividende est ici un masquage additif modulaire de module N.

De préférence, pour une et une seule valeur de i, $H_i$ vaut 1 et pour les autres valeurs de i, $H_i$ est nul. Dans ce cas, la détermination d'une et une seule deuxième partie du dividende masqué comprend en outre une augmentation de 1 du produit déterminé modulo le module public.

Le procédé est ainsi plus performant car il limite les opérations nécessaires à la détermination du dividende.

Le module public N peut avoir été enregistré dans une mémoire du dispositif électronique 2 lors d'une phase de fonctionnement du dispositif électronique 2 antérieure au procédé décrit ici.

Si le module public N n'est pas disponible, le procédé peut calculer le module public à partir du module donné et du nombre.

Selon un premier exemple, le processeur 4 calcule le module public N comme suit : $Z = \sum_{i=1}^{n}(P_i \cdot Q_{(s)})$ puis N = Z/S avec Z un résultat intermédiaire. Sommer des produits $P_i \cdot Q_{(s)}$, i allant de 1 à n, permet de préserver la confidentialité du module donné P.

Selon un deuxième exemple, si le nombre Q est masqué sous la forme de m quatrièmes parties d'un masquage additif, les quatrièmes parties ayant été préalablement déterminées puis mémorisées dans l'entité de mémorisation 6, le processeur 4 calcule le module public N comme suit : $N = \sum_{i=1}^{n}\left(\sum_{j=1}^{m}(P_i \cdot Q_j)\right)$ .

Sommer n · m produits $P_i · Q_j$, i allant de l à n et j allant de l à m, permet de préserver la confidentialité du module donné P et du nombre Q.

Le procédé comprend alors une étape de calcul de la division exacte du dividende par le nombre (étape S14) pendant laquelle le processeur 4 calcule la division exacte du dividende par le nombre, l'inverse modulaire étant le résultat de la division exacte, le dividende, l'inverse modulaire et le nombre étant manipulés sous forme masquée.

Un homme du métier comprendra que les étapes du procédé de détermination d'un inverse modulaire décrit en référence à la figure 3, peuvent être exécutées selon d'autres ordres dans la mesure où chaque étape dispose des éléments nécessaires à son exécution.

Selon un exemple, l'étape de détermination d'un nombre masqué (étape S6) peut être exécutée avant l'étape de détermination d'un autre module masqué (étape S4) et après l'étape de détermination de masques multiplicatifs (étape S2).

Selon un autre exemple, l'étape de détermination d'un inverse multiplicatif (étape S8) peut être exécutée avant l'étape de détermination d'un nombre masqué (étape S6) et après l'étape de détermination d'un autre module masqué (étape S4).

La figure 4 illustre sous forme de logigramme les sous-étapes principales de l'étape de calcul de la division exacte du dividende par le nombre (étape S14) selon un premier mode de réalisation. Dans ce premier mode de réalisation de l'étape de calcul de la division exacte,

- le nombre masqué $Q_{(S)}$ est la forme masquée du nombre manipulée pour effectuer la division exacte ; et
- l'inverse modulaire est manipulé sous la forme de n cinquièmes parties $C_1, ... , C_n$ d'un masquage additif.

Selon une sous-étape de changement de masque (sous-étape SS2), le processeur 4 remplace le masquage additif modulaire de module N du dividende par un masquage additif.

Pendant cette sous-étape, le processeur 4 remplace les n deuxièmes parties du $T_1, ... , T_n$ masquage additif modulaire de module N du dividende par n sixièmes parties $E_1, ... , E_n$ d'un masquage additif sur les entiers, dudit dividende.

Typiquement, le processeur 4 tire n-1 troisièmes aléas $E_2, ... , E_n$ uniformément dans un intervalle fermé ayant une borne inférieure de valeur 0 et une borne supérieure de valeur $2^{p+q} - 1$, puis le processeur 4 initialise une donnée $E_1$ comme suit : $E_1 = T_1$. Ensuite, pour chaque i allant de 2 à n, le processeur 4 met à jour la donnée $E_1$ comme suit : $E_1 = E_1 - E_i$. Puis, pour chaque i allant de 2 à n, le processeur 4 met à jour la donnée $E_1$ comme suit : $E_1 = E_1 + T_i$. Pour finir, pour chaque i allant de 2 à n, si $T_1 + \cdots + T_n$ est une valeur strictement inférieure à $(i - 1) · N$, le processeur 4 met à jour la donnée

$E_1$ comme suit : $E_1 = E_1 - N$.

Le processeur obtient donc n sixièmes parties $E_1, ... , E_n$ à partir des n troisièmes parties $T_1, ... , T_n$. Retrancher au moins un troisième aléa $E_i$ à la donnée $E_I$ avant d'ajouter à la donnée E1 les n - 1 troisièmes parties $T_2, ... , T_n$, permet de préserver la confidentialité du dividende.

Les comparaisons de $T_1 + \cdots + T_n$ et $(i - 1) · N$ sont faites de manières sécurisées, par exemple selon le mode de réalisation décrit ci-avant en référence à la figure 2.

L'étape de calcul de la division exacte comprend alors une sous-étape de randomisation du dividende (sous-étape SS4), pendant laquelle le processeur 4 randomise chaque sixième partie du dividende masqué par application du deuxième masque multiplicatif à la sixième partie concernée. Typiquement, pour tout i allant de 1 à n, le processeur 4 effectue un calcul comme suit : $E_i = E_i · S$. Chaque sixième partie $E_i$ peut être décomposée en un ou plusieurs mot(s) $E_i[j]$ de rang j, j représentant le poids du mot concerné et $E_i[0]$ étant le mot de poids le plus faible de la sixième partie $E_i$. De même,

- le nombre masqué $Q_{(S)}$ peut être décomposée en un ou plusieurs mot(s) $Q(s)[j]$ de rang j, j représentant le poids du mot concerné et $Q(s)[0]$ étant le mot de poids le plus faible de la nombre masqué $Q_{(S)}$ ; et
- pour tout i allant de 1 à n, la cinquième partie $C_i$ de l'inverse modulaire peut être décomposée en un ou plusieurs mot(s) $C_i[j]$ de rang j, j représentant le poids du mot concerné et $C_i[0]$ étant le mot de poids le plus faible de la cinquième partie $C_i$.

Chaque cinquième partie $C_i$ de l'inverse modulaire se décompose en w mots, w ayant la valeur définie comme suit : $w = (p + k - 1) \gg b$ avec $k = 2^b$, k étant la taille de mot manipulé par le processeur 4. Comme déjà décrit, la taille k d'un mot est par exemple de 8 bits, 16 bits, 32 bits, 64 bits ou 128 bits. Par exemple si k vaut 8, b vaut 3.

Dans la présente divulgation, la notation $A \gg a$ désigne le plus grand entier inférieur ou égal à $A/2^a$.

L'étape de calcul de la division exacte comprend alors une sous-étape de calcul de l'inverse de l'opposé du mot de poids le plus faible du nombre masqué $Q_{(S)}$ (sous-étape SS6) pendant laquelle le processeur 4 calcule un inverse U modulo M une puissance de 2, de l'opposé du mot de poids le plus faible du nombre masqué $Q(s)$. Le processeur 4 obtient donc l'inverse U dont la valeur est définie comme suit : $U = (-Q_{(S)}[0])^{-1} \bmod M$. Typiquement, M a pour valeur $2^k$, k étant la taille de mot manipulé par le processeur 4.

Le calcul d'un inverse modulo une puissance de 2 peut se faire selon les techniques connues de l'homme du métier, par exemple selon la technique décrite à la fin de la section 4 du document « Tudor Jebelean: An Algorithm for Exact Division. J. Symb. Comput. 15(2): 169-180 (1993) ». L'étape de calcul de la division exacte comprend alors une sous-étape d'initialisation d'un premier index (sous-étape SS8) pendant laquelle le processeur 4 initialise un entier j à la valeur 0.

L'étape de calcul de la division exacte comprend alors une sous-étape d'initialisation d'un deuxième index (sous-étape SS10) pendant laquelle le processeur 4 initialise un entier i à la valeur 1.

L'étape de calcul de la division exacte comprend alors une sous-étape de calcul d'un mot de cinquième partie (sous-étape SS12), pendant laquelle le processeur 4 calcule le mot de rang j de la cinquième partie $C_i$ de l'inverse modulaire comme suit : $C_i[j] = E_i[0] \cdot U \bmod 2^k$. Comme déjà décrit, k est la taille de mot manipulé par le processeur 4.

L'étape de calcul de la division exacte comprend alors une sous-étape de mise à jour d'une sixième partie (sous-étape SS14) pendant laquelle le processeur 4 met à jour la sixième partie $E_i$ comme suit : $E_i = (E_i - Q_{(S)} \cdot C_i[j]) \gg k$.

Le processeur 4 détermine ensuite, à une première sous-étape de test (étape SS16), si l'entier i a atteint la valeur n.

Dans la négative, l'entier i est incrémenté de 1 dans une première sous-étape d'incrémentation (sous-étape SS20) et le procédé boucle à la sous-étape de calcul d'un mot de cinquième partie (sous-étape SS12).

Dans l'affirmative à la première sous-étape de test (sous-étape SS16), le processeur détermine ensuite, à une deuxième sous-étape de test (sous-étape SS18) si l'entier j a atteint la valeur w - 1. Dans la négative à la deuxième sous-étape de test, l'entier j est incrémenté de 1 dans une deuxième sous-étape d'incrémentation (sous-étape SS22) et le procédé boucle à la sous-étape d'initialisation d'un deuxième index (sous-étape SS10) pour effectuer un tour suivant.

Ainsi, le procédé met en œuvre n · w sous-étapes de calcul d'un mot de cinquième partie (sous-étape SS12) et n · w sous-étapes de mise à jour d'une sixième partie (sous-étape SS14).

Dans l'affirmative à la deuxième sous-étape de test (sous-étape SS18), l'étape de calcul de la division exacte du dividende par le nombre (étape S14) prend fin.

Dans ce premier mode de réalisation de l'étape de calcul de la division exacte, le nombre masqué $Q_{(S)}$ est la forme masquée du nombre qui est manipulée pour effectuer la division exacte. Le calcul de la division exacte manipule ainsi le nombre masqué $Q_{(S)}$ et le deuxième masque multiplicatif S. Le procédé est ainsi plus performant car il limite les opérations nécessaires au calcul de la division exacte.

Pour ce premier mode de réalisation de l'étape de calcul de la division exacte, le deuxième masque multiplicatif doit être impair. Le deuxième masque multiplicatif impair permet de sécuriser le procédé contre des attaques par canaux auxiliaires.

Un homme du métier comprendra que les sous-étapes de l'étape de calcul de la division exacte, peuvent être exécutées selon d'autres ordres dans la mesure où chaque sous-étape dispose des éléments nécessaires à son exécution.

Selon un exemple, la sous-étape de calcul de l'inverse de l'opposé du mot de poids le plus faible du nombre masqué $Q_{(S)}$ (sous-étape SS6) peut être exécutée avant la sous-étape de randomisation du dividende (sous-étape SS4) et/ou la sous-étape de changement de masque (sous-étape SS2).

Selon un autre exemple, la sous-étape d'initialisation d'un premier index (sous-étape SS8) peut être exécutée avant la sous-étape de calcul de l'inverse de l'opposé du mot de poids le plus faible du nombre masqué $Q_{(S)}$ (sous-étape SS6) et/ou la sous-étape de randomisation du dividende (sous-étape SS4) et/ou la sous-étape de changement de masque (sous-étape SS2).

Le mode de réalisation de l'étape de calcul de la division exacte, décrit en référence à la figure 4, exécute les tours, c'est-à-dire les itérations, de chaque boucle avec un index qui s'incrémente à chaque tour. L'homme du métier comprendra que l'index i peut être géré différemment tant que toutes les valeurs de l'index i sont parcourues en exécutant les tours de la boucle concernée. Typiquement l'étape de calcul de la division exacte peut être adaptée pour faire les n · w sous-étapes de mise à jour d'une sixième partie (sous-étape SS14) dans un ordre différent, chaque itération utilisant une valeur différente du couple d'entiers i,j. Par exemple, l'homme du métier peut initialiser l'entier i avec la valeur n dans la sous-étape d'initialisation d'un deuxième index (sous-étape SS10), initialiser l'entier j avec la valeur 0 dans la sous-étape d'initialisation d'un premier index (sous-étape SS8), remplacer la première sous-étape d'incrémentation (sous-étape SS20) par une première sous-étape de décrémentation qui décrémente l'entier i de 1, déterminer dans la première sous-étape de test (sous-étape SS16) si l'entier i a atteint 1, et déterminer dans la deuxième sous-étape de test (sous-étape SS18) si l'entier j a atteint w - 1.

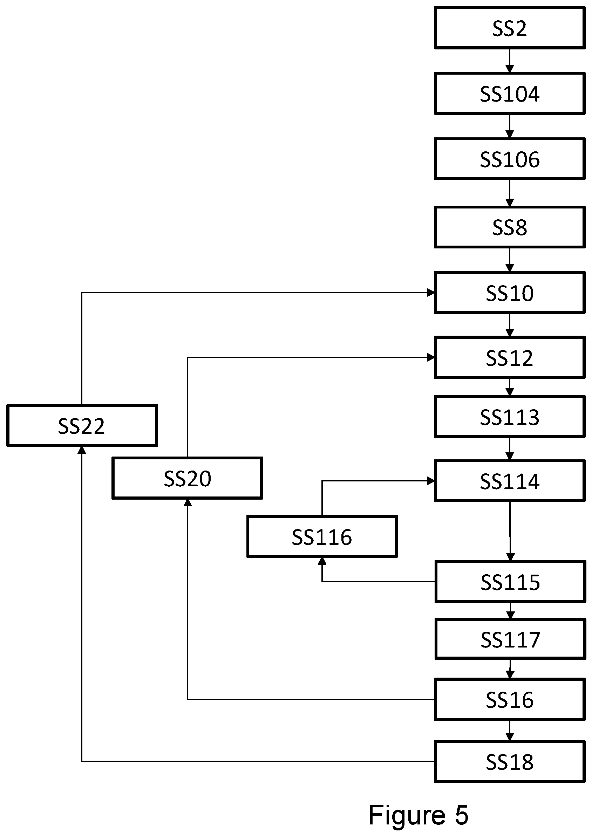

La figure 5 illustre sous forme de logigramme les sous-étapes principales de l'étape de calcul de la division exacte du dividende par le nombre (étape S14) selon un deuxième mode de réalisation. Dans ce deuxième mode de réalisation de l'étape de calcul de la division exacte,

- le nombre est manipulé sous la forme d'une pluralité de parties d'un masquage additif ;
- l'inverse modulaire est manipulé sous la forme de n cinquièmes parties $C_1, ... , C_n$ d'un masquage additif.

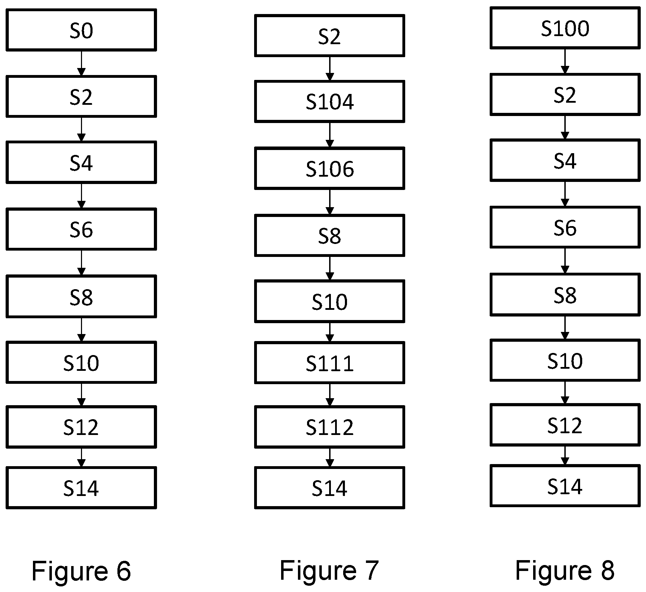

Plus précisément, le deuxième mode de réalisation est décrit ici comme manipulant les m quatrièmes parties. On notera cependant, que le deuxième mode de réalisation pourrait manipuler une pluralité de parties d'un masquage additif du nombre obtenues à partir d'un autre masquage, par exemple à partir du nombre masqué $Q_{(S)}$ et du deuxième masque multiplicatif S. Un tel changement de masque est décrit ci-après pour l'étape de changement de masque (étape S111) en référence à la figure 7.

Le deuxième mode de réalisation de l'étape de calcul de la division exacte comprend une sous-étape de changement de masque identique à la sous-étape de changement de masque (sous-étape SS2), décrite ci-avant en référence à la figure 4.

L'étape de calcul de la division exacte comprenant alors une sous-étape de randomisation du dividende et du nombre (sous-étape SS104), pendant laquelle le processeur 4 détermine un quatrième aléa X par tirage aléatoire, c'est-à-dire par tirage véritablement aléatoire ou par tirage pseudo-aléatoire, puis randomise chaque sixième partie du dividende masqué par application du quatrième aléa à la sixième partie concernée et chaque quatrième partie par application du quatrième aléa à la quatrième partie concernée.

Typiquement, , le processeur 4 tire le quatrième aléa X uniformément dans un intervalle fermé ayant une borne inférieure de valeur 1 et une borne supérieure de valeur $2^s-1$, et pour tout i allant de 1 à n, le processeur 4 effectue un calcul comme suit : $E_i = E_i \cdot X$. En outre, pour tout i allant de 1 à m, le processeur effectue un calcul comme suit : $Q_i = Q_i \cdot X$.

Le processeur 4 doit tirer un quatrième aléa X impair.

Le quatrième aléa impair permet de sécuriser ce deuxième mode deuxième mode de réalisation de l'étape de calcul de la division exacte, contre des attaques par canaux auxiliaires.

Chaque sixième partie $E_i$ peut être décomposée en un ou plusieurs mot(s) $E_i[j]$ de rang j, j représentant le poids du mot concerné et $E_i[0]$ étant le mot de poids le plus faible de la cinquième partie $E_i$. De même,

- le quatrième partie $Q_i$ peut être décomposée en un ou plusieurs mot(s) $Q_i[j]$ de rang j, j représentant le poids du mot concerné et $Q_i[0]$ étant le mot de poids le plus faible de la quatrième partie $Q_i$; et
- pour tout i allant de 1 à n, la cinquième partie $C_i$ de l'inverse modulaire peut être décomposée en un ou plusieurs mot(s) $C_i[j]$ de rang j, j représentant le poids du mot concerné et $C_i[0]$ étant le mot de poids le plus faible de la cinquième partie $C_i$.

Chaque cinquième partie $C_i$ de l'inverse modulaire se décompose en w mots, w ayant la valeur définie comme suit : w = (p + k - 1) » b avec k = $2^b$, k étant la taille de mot manipulé par le processeur 4. Comme déjà décrit, la taille k d'un mot est par exemple de 8 bits, 16 bits, 32 bits, 64 bits ou 128 bits. Par exemple, si k vaut 8, b vaut 3.

L'étape de calcul de la division exacte comprend alors une sous-étape de calcul de l'inverse de l'opposé d'un mot de poids le plus faible (sous-étape SS106) pendant laquelle le processeur 4 calcule un inverse U modulo M une puissance de 2, de l'opposé de la somme des mots de poids le plus faible des quatrièmes parties randomisées. Le processeur 4 obtient donc l'inverse U dont la valeur est définie comme suit :

$$U = (-\sum_{i=1}^{m} Q_i[0])^{-1} \bmod M$$

. Typiquement, M a pour valeur $2^k$, k étant la taille de mot manipulé par le processeur 4.

Comme déjà décrit, le calcul d'un inverse modulo une puissance de 2 peut se faire selon les techniques connues de l'homme du métier, par exemple selon la technique décrite à la fin de la section 4 du document « Tudor Jebelean: An Algorithm for Exact Division. J. Symb. Comput. 15(2): 169-180 (1993) ».

L'étape de calcul de la division exacte comprend alors des sous-étapes d'initialisation d'un premier index, d'initialisation d'un deuxième index, et de calcul d'un mot de cinquième partie, respectivement identiques aux sous-étapes d'initialisation d'un premier index (sous-étape SS8), d'initialisation d'un deuxième index (sous-étape SS10) et de calcul d'un mot de cinquième partie (sous-étape SS12) décrites ci-avant en référence à la figure 4.

L'étape de calcul de la division exacte comprend alors une sous-étape d'initialisation d'un troisième index (sous-étape SS113) pendant laquelle le processeur 4 initialise un entier v à la valeur 1.

L'étape de calcul de la division exacte comprend alors une sous-étape de mise à jour d'une sixième partie (sous-étape SS114) pendant laquelle le processeur 4 met à jour la sixième partie $E_i$ comme suit : $E_i = E_i - Q_v \cdot C_i[j]$.

Le processeur 4 détermine ensuite, à une troisième sous-étape de test (étape SS115), si l'entier v a atteint la valeur m.

Dans la négative, l'entier v est incrémenté de 1 dans une troisième sous-étape d'incrémentation (sous-étape SS116) et le procédé boucle à la sous-étape de mise à jour d'une sixième partie (sous-étape SS114).

Dans l'affirmative à la troisième sous-étape de test (sous-étape SS115), le processeur modifie une sixième partie, à une sous-étape de modification d'une sixième partie (sous-étape SS117), comme suit : $E_i = E_i$ » k.

L'étape de calcul de la division exacte comprend alors une première sous-étape de test identique à la première sous-étape de test (sous-étape SS16) décrite ci-avant en référence à la figure 4.

Dans la négative à la première sous-étape de test (sous-étape SS16), l'entier i est incrémenté de 1 dans une première sous-étape d'incrémentation identique à la première sous-étape d'incrémentation (sous-étape SS20) décrite en référence à la figure 4 et le procédé boucle à la sous-étape de calcul d'un mot de cinquième partie (sous-étape SS12).

Dans l'affirmative à la première sous-étape de test (sous-étape SS16), le processeur détermine ensuite, à une deuxième sous-étape de test identique à la deuxième sous-étape de test (sous-étape SS18) décrite en référence à la figure 4, si l'entier j a atteint la valeur w - 1.

Dans la négative à la deuxième sous-étape de test, l'entier j est incrémenté de 1 dans une deuxième sous-étape d'incrémentation identique à la deuxième sous-étape d'incrémentation (sous-étape SS22) décrite en référence à la figure 4 et le procédé boucle à la sous-étape d'initialisation d'un deuxième index (sous-étape SS10) pour effectuer un tour suivant.

Ainsi, le procédé met en œuvre n · w sous-étapes de calcul d'un mot de cinquième partie (sous-étape SS12), n · w sous-étapes de modification d'une sixième partie (sous-étape SS117), et n · w · m sous-étapes de mise à jour d'une sixième partie (sous-étape SS114).

Dans l'affirmative à la deuxième sous-étape de test (sous-étape SS18), l'étape de calcul de la division exacte du dividende par le nombre (étape S14) prend fin.

Un homme du métier comprendra que les sous-étapes de l'étape de calcul de la division exacte, peuvent être exécutées selon d'autres ordres dans la mesure où chaque sous-étape dispose des éléments nécessaires à son exécution.

Selon un exemple, la sous-étape d'initialisation d'un premier index (sous-étape SS8) peut être exécutée avant la sous-étape de calcul de l'inverse de l'opposé d'un mot de poids le plus faible (sous-étape SS106) et/ou la sous-étape de randomisation du dividende et du nombre (sous-étape SS104) et/ou la sous-étape de changement de masque (sous-étape SS2).

Le mode de réalisation de l'étape de calcul de la division exacte, décrit en référence à la figure 5, exécute les tours, c'est-à-dire les itérations, de chaque boucle avec un index qui s'incrémente à chaque tour. L'homme du métier comprendra que l'index i et/ou l'index v peut être géré différemment tant que toutes les valeurs de l'index concerné sont parcourues en exécutant les tours de la boucle concernée.

Typiquement, l'étape de calcul de la division exacte peut être adaptée pour faire les n · w sous-étapes de calcul d'un mot de cinquième partie dans un ordre différent, chaque itération utilisant une valeur différente du couple d'entiers i,j. Par exemple, l'homme du métier peut initialiser l'entier i avec la valeur n dans la sous-étape d'initialisation d'un deuxième index (sous-étape SS10), initialiser l'entier j avec la valeur 0 dans la sous-étape d'initialisation d'un premier index (sous-étape SS8), remplacer la première sous-étape d'incrémentation (sous-étape SS20) par une première sous-étape de décrémentation qui décrémente l'entier i de 1, déterminer dans la première sous-étape de test (sous-étape SS16) si l'entier i a atteint 1, et déterminer dans la deuxième sous-étape de test (sous-étape SS18) si l'entier j a atteint w - 1.

En outre, l'étape de calcul de la division exacte peut être adaptée pour faire les n · w · m sous-étapes de mise à jour d'une sixième partie (sous-étape SS114) dans un ordre différent, chaque itération utilisant une valeur différente de l'entier v pour un couple d'entiers i,j donné. Par exemple, l'homme du métier peut initialiser l'entier v avec la valeur m dans la sous-étape d'initialisation d'un troisième index (sous-étape SS113), remplacer la troisième sous-étape d'incrémentation (sous-étape SS116) par une troisième sous-étape de décrémentation qui décrémente l'entier v de 1, et déterminer dans la troisième sous-étape de test (sous-étape SS115) si l'entier v a atteint 1.

Une implémentation masquée d'une opération, ou d'un algorithme, produisant un résultat égal à l'application de ladite opération ou dudit algorithme à des opérandes, est une implémentation qui manipule lesdites opérandes sous forme masquée pour produire le résultat également sous forme masquée, sans jamais manipuler les opérandes ni le résultat sous forme non masquée.

L'invention permet de calculer sous forme masquée l'inverse modulaire du nombre Q dans l'anneau des entiers modulo le module donné P, c'est à dire sans manipulation du nombre, du module donné et de l'inverse modulaire, sous forme non masquée.

L'invention permet de remplacer une opération de réduction modulaire du nombre modulo le module donné, ladite opération de réduction modulaire devant être sous forme masquée par :

- une réduction modulaire d'une première donnée modulo le module public, la première donnée et le module public étant manipulés sous forme non masquée, et

- une inversion modulaire de l'autre module masqué modulo le nombre masqué, l'autre module masqué et le nombre masqué étant manipulés en tant que tel, c'est-à-dire l'autre module masqué et le nombre masqué n'étant pas eux-mêmes masqués pour être manipulés, et

- une division exacte sous forme masquée, c'est-à-dire manipulant le dividende, le diviseur et son résultat sous forme masquée.

Ainsi, le procédé décrit en référence aux figures 3 à 5 ne nécessite pas l'implémentation sous forme masquée des opérations de réduction modulaire et d'inversion modulaire. A la place, le procédé permet d'utiliser l'implémentation sous forme masquée d'une division exacte.

L'invention effectue le calcul suivant de manière sécurisée : $[-[(P_{(R)})^{-1} \cdot R \bmod (Q(s))] \cdot P + 1 \bmod N]/Q$.

Ce calcul peut également être noté : $[-[(P \cdot R)^{-1} \cdot R \bmod (Q \cdot S)] \cdot P + 1 \bmod N]/Q$.

Par définition de l'inverse modulaire, il existe $\alpha$ tel que : $Q \cdot [Q^{-1} \bmod P] = 1 + \alpha \cdot P$.

Quand le nombre Q est multiplié par le deuxième masque multiplicatif S, toujours d'après la définition de l'inverse modulaire, il existe $\beta$ tel que : $[(Q \cdot S)^{-1} \bmod P] \cdot S = [Q^{-1} \bmod P] + \beta \cdot P$.

Si on multiplie cette dernière équation par le nombre Q sur les entiers, il existe $\beta$ tel que : $Q \cdot [(Q \cdot S)^{-1}$

mod P] $\cdot$ S = Q $\cdot$ [Q$^{-1}$ mod P] + $\beta$ $\cdot$ P $\cdot$ Q.

On a vu que : Q $\cdot$ [Q$^{-1}$ mod P] = 1 + $\alpha$ $\cdot$ P. On a donc : Q $\cdot$ [(Q $\cdot$ S)$^{-1}$ mod P] $\cdot$ S = 1 + $\alpha$ $\cdot$ P + $\beta$ $\cdot$ P $\cdot$ Q.

Or on a Q $\cdot$ [Q$^{-1}$ mod P] = 1 + $\alpha$ $\cdot$ P. Donc 1 + $\alpha$ $\cdot$ P est strictement supérieur à 0 et strictement inférieur à P. Q, c'est-à-dire strictement inférieur à N.

Ainsi quand on réduit Q. [(Q $\cdot$ S)$^{-1}$ mod P] $\cdot$ S = 1 + $\alpha$ $\cdot$ P + $\beta$ $\cdot$ P $\cdot$ Q par N, on obtient :

(Q. [(Q $\cdot$ S)$^{-1}$ mod P] $\cdot$ S) mod N = 1 + $\alpha$ $\cdot$ P = Q $\cdot$ [Q$^{-1}$ mod P].

Quand on exprime l'inverse de Q $\cdot$ S modulo P par l'inverse de P modulo Q $\cdot$ S, on a :

Q. [(Q $\cdot$ S)$^{-1}$ mod P] $\cdot$ S = P $\cdot$ Q $\cdot$ S - [P$^{-1}$ mod (Q $\cdot$ S)] $\cdot$ P + 1.

On a donc : (P $\cdot$ Q $\cdot$ S - [P$^{-1}$ mod (Q $\cdot$ S)] $\cdot$ P + 1) mod N = Q $\cdot$ [Q$^{-1}$ mod P].

Or P $\cdot$ Q est le module public N, on a donc l'égalité suivante : (-[P$^{-1}$ mod (Q $\cdot$ S)] $\cdot$ P + 1) mod N = Q $\cdot$ [Q$^{-1}$ mod P].

Enfin, quand on multiplie le module donné P par le premier masque applicatif R, on obtient : (-[P$^{-1}$ mod (Q $\cdot$ S)] $\cdot$ P + 1) mod N = (-[((P $\cdot$ R)$^{-1}$ $\cdot$ R) mod (Q $\cdot$ S)] $\cdot$ P + 1) mod N. L'égalité suivante est donc vérifiée : (-[((P $\cdot$ R)$^{-1}$ $\cdot$ R) mod (Q $\cdot$ S)] $\cdot$ P + 1) mod N = Q $\cdot$ [Q$^{-1}$ mod P].

L'invention obtient donc bien le calcul de l'inverse modulaire d'un nombre Q dans l'anneau des entiers modulo un module donné P en effectuant le calcul suivant : [-[(P$_{(R)}$$^{-1}$ $\cdot$ R mod (Q(s))] $\cdot$ P + 1 mod N]/Q.

La figure 6 illustre sous forme de logigramme les étapes principales d'un procédé de détermination d'un inverse modulaire selon un deuxième mode de réalisation de l'invention.

Le procédé de la figure 6 vise à déterminer l'inverse modulaire d'un nombre Q dans l'anneau des entiers modulo un module donné P, le nombre et le module donné étant des nombres premiers, et le module donné étant masqué sous la forme de n premières parties P$_1$, ... ,P$_n$ d'un masquage initial avec n un entier strictement supérieur à un.

La tailles du module donné P est de p bits et la taille du nombre Q est de q bits. Par exemple p a pour valeur 1024 et q a aussi pour valeur 1024. On notera cependant que p peut avoir une valeur différente de celle de q.

Le masquage initial est ici un masquage additif modulaire de module 2$^{p'}$ avec p' un entier supérieur ou égal à p.

Le procédé de la figure 6 est ici mis en œuvre par le dispositif électronique 2 du fait de l'exécution des instructions de programme d'ordinateur mémorisées dans l'entité de mémorisation 6 comme indiqué ci-dessus.

Selon une étape de changement de masque (étape S0), le processeur 4 remplace le masquage additif modulaire de module 2$^{p'}$ du module donné par un masquage additif sur les entiers.

Typiquement, le processeur 4 tire n-1 troisièmes autres aléas E'$_2$, ... ,E'$_n$ uniformément dans un intervalle fermé ayant une borne inférieure de valeur 0 et une borne supérieure de valeur 2$^p$ - 1, puis le processeur 4 initialise une autre donnée E'$_1$ comme suit : E'$_1$ = P$_1$. Ensuite, pour chaque i allant de 2 à n, le processeur 4 met à jour l'autre donnée E'$_1$ comme suit : E'$_1$ = E'$_1$ - E'$_i$. Puis, pour chaque i allant de 2 à n, le processeur 4 met à jour la donnée E'$_1$ comme suit : E'$_1$ = E'$_1$ + P$_i$. Pour finir, pour chaque i allant de 2 à n, si P$_1$ + $\cdots$ + P$_n$ est une valeur strictement inférieure à (i - 1) $\cdot$ 2$^{p'}$, le processeur 4 met à jour l'autre donnée comme suit : E'$_1$ = E'$_1$ - 2$^{p'}$. Ensuite, pour tout i allant de 1 à n, le processeur 4 met à jour une première partie P$_i$ comme suit : P$_i$ = E'$_i$.

Retrancher au moins un troisième autre aléa E'$_i$ à l'autre donnée E'$_1$ avant d'ajouter à l'autre donnée E'$_1$ les n - 1 premières parties P$_2$, ... ,P$_n$, permet de préserver la confidentialité du module donné.

La comparaison de P$_1$ + $\cdots$ + P$_n$ et (i - 1) $\cdot$ 2$^{p'}$ est faite de manière sécurisée, par exemple selon le mode de réalisation décrit ci-avant en référence à la figure 2.

A la fin de l'étape de changement de masque (étape S0), les premières parties sont la forme masquée du module donné selon un masquage additif sur les entiers.

Le procédé comprend alors une étape de détermination de masques multiplicatifs, une étape de détermination d'un autre module masqué, une étape de détermination d'un nombre masqué, une étape de détermination d'un inverse multiplicatif, une étape de détermination d'un inverse intermédiaire, une étape détermination de deuxièmes parties d'un masquage additif modulaire d'un dividende et une étape de calcul de la division exacte du dividende par le nombre, respectivement identiques à l'étape de détermination de masques multiplicatifs (étape S2), à l'étape de détermination d'un autre module masqué (étape S4), à l'étape de détermination d'un nombre masqué (étape S6), à l'étape de détermination d'un inverse multiplicatif (étape S8), à l'étape de détermination d'un inverse intermédiaire (étape S10), à l'étape de détermination de deuxièmes parties d'un masquage additif modulaire d'un dividende (étape S12) et à l'étape de calcul de la division exacte du dividende par le nombre (étape S14) décrites ci-avant en référence à la figure 3.

Si le nombre Q est masqué sous la forme de quatrièmes parties d'un autre masquage initial, le procédé de la figure 6 peut comprendre en outre autre étape de changement de masque (non représentée), pendant laquelle le processeur 4 remplace l'autre masquage initial par un masquage additif sur les entiers.

Par exemple, si l'autre masquage initial est un masquage additif modulaire de module 2$^{q'}$ avec q' un entier supérieur ou égale à q, le procédé de la figure 6 peut comprendre en outre une autre étape de changement de masque (non représentée), pendant laquelle le processeur 4 remplace le masquage additif modulaire de module 2$^{q'}$ du nombre par un masquage additif sur les entiers. Typiquement, le processeur 4 tire m-1 cinquième aléas E"$_2$, ... E"$_m$ uniformément dans un intervalle fermé ayant une borne inférieure de valeur 0 et une borne supérieure de valeur $2^q$ - 1, puis le processeur 4 initialise une deuxième autre donnée $E''_I$ comme suit : $E''_1 = Q_1$. Ensuite, pour chaque i allant de 2 à m, le processeur 4 met à jour la deuxième autre donnée $E''_1$ comme suit : $E''_1 = E''_1 - E''_i$. Puis, pour chaque i allant de 2 à m, le processeur 4 met à jour la donnée $E''_1$ comme suit : $E''_1 = E''_1 + Q_i$. Pour finir, pour chaque i allant de 2 à m, si $Q_1 + \cdots + Q_n$ est une valeur strictement inférieure à $(i - 1) \cdot 2^{q'}$, le processeur 4 met à jour la deuxième autre donnée comme suit : $E''_1 = E''_1 - 2^{q'}$. Ensuite, pour tout i allant de 1 à m, le processeur 4 met à jour une quatrième partie $Q_i$ comme suit : $Q_i = E''_i$.

Retrancher au moins un cinquième aléa $E''_i$ à la deuxième autre donnée $E''_I$ avant d'ajouter à la deuxième autre donnée $E''_I$ les m - 1 quatrièmes parties $Q_2, ... , Q_m$, permet de préserver la confidentialité du nombre.

La comparaison de $Q_1 + \cdots + Q_m$ et $(i - 1) \cdot 2^{q'}$ est faite de manière sécurisée, par exemple selon le mode de réalisation décrit ci-avant en référence à la figure 2.

A la fin de l'autre étape de changement de masque, les quatrièmes parties sont la forme masquée du nombre selon un masquage additif sur les entiers.

L'autre étape de changement de masque est exécutée au sein du procédé avant qu'une autre étape dudit procédé ait besoin des quatrièmes parties du nombre.

Par exemple, l'autre étape de changement de masque est exécutée avant l'étape de détermination d'un nombre masqué (étape S6), et/ou avant l'étape de détermination de deuxièmes parties d'un masquage additif modulaire d'un dividende (étape S12), et/ou avant l'étape de calcul de la division exacte du dividende par le nombre (étape S14).

Ainsi, le procédé décrit en référence à la figure 6 ne nécessite pas l'implémentation sous forme masquée des opérations de réduction modulaire et d'inversion modulaire. A la place, le procédé permet d'utiliser l'implémentation sous forme masquée d'une division exacte.

Un homme du métier comprendra que les étapes du procédé de détermination d'un inverse modulaire décrit en référence à la figure 6, peuvent être exécutées selon d'autres ordres dans la mesure où chaque étape dispose des éléments nécessaires à son exécution.

Selon un premier exemple, l'étape de détermination d'un nombre masqué (étape S6) peut être exécutée avant l'étape de détermination d'un autre module masqué (étape S4) et après l'étape de détermination de masques multiplicatifs (étape S2).

Selon un deuxième exemple, l'étape de détermination d'un inverse multiplicatif (étape S8) peut être exécutée avant l'étape de détermination d'un nombre masqué (étape S6) et après l'étape de détermination d'un autre module masqué (étape S4).

Selon un troisième exemple, l'étape de changement de masque (étape S0) peut être exécutée avant l'étape de détermination d'un autre module masqué (étape S4) et après l'étape de détermination de masques multiplicatifs (étape S2).

La figure 7 illustre sous forme de logigramme les étapes principales d'un procédé de détermination d'un inverse modulaire selon un troisième mode de réalisation de l'invention.

Le procédé de la figure 7 vise aussi à déterminer l'inverse modulaire d'un nombre Q dans l'anneau des entiers modulo un module donné P, le nombre et le module donné étant des nombres premiers, et le module donné étant masqué sous la forme de n premières parties $P_I, ... , P_n$ d'un masquage initial avec n un entier strictement supérieur à un.

La tailles du module donné P est de p bits et la taille du nombre Q est de q bits. Par exemple p a pour valeur 1024 et q a aussi pour valeur 1024. On notera cependant que p peut avoir une valeur différente de celle de q.

Le masquage initial est ici un masquage multiplicatif sur les entiers à deux partages. L'entier n a donc ici pour valeur 2.

Le procédé de la figure 7 est mis en œuvre par le dispositif électronique 2 du fait de l'exécution des instructions de programme d'ordinateur mémorisées dans l'entité de mémorisation 6.

Le procédé de la figure 7 comprend une étape de détermination de masques multiplicatifs identique à l'étape de détermination de masques multiplicatifs (étape S2) décrite en référence à la figure 3. Le procédé comprend alors une étape de détermination d'un autre module masqué (étape S104), pendant laquelle le processeur 4 détermine un autre module masqué $P_{(R)}$ par application du premier masque multiplicatif R au module donné P.

Typiquement, le processeur 4 calcule l'autre module masqué $P_{(R)}$ comme suit : $P_{(R)} = (P_1 \cdot R)/P_2$ avec $P_1$ et $P_2$ les premières parties.

Selon une étape de détermination d'un nombre masqué (étape S106), le processeur 4 détermine un nombre masqué $Q(S)$ égal au produit du deuxième masque multiplicatif S et du nombre Q.

Le nombre masqué peut être déterminé par lecture d'une mémoire du dispositif électronique 2, par exemple si le nombre masqué a été préalablement déterminé puis mémorisé dans l'entité de mémorisation 6. Cette mise en œuvre peut être avantageuse si le deuxième masque multiplicatif a aussi été enregistré dans une mémoire du dispositif électronique 2 lors d'une phase de fonctionnement dudit dispositif électronique 2 antérieure au procédé décrit ici.

Le nombre masqué peut être déterminé par calcul, par exemple si le nombre Q est masqué sous la forme de quatrièmes parties d'un autre masquage initial, les quatrièmes parties ayant préalablement déterminé puis mémorisé dans l'entité de mémorisation 6. L'autre masquage initial peut être un masquage pami un masquage additif, un masquage additif modulaire, un masquage multiplication et un masquage multiplicatif modulaire.

Typiquement, quand l'autre masquage initial est un masquage multiplicatif à m partages, m ayant pour valeur 2, le processeur 4 calcule le nombre masqué $Q_{(S)}$ comme suit : $Q_{(S)} = (Q_1 \cdot S)/Q_2$ avec $Q_1$ et $Q_2$ les quatrièmes parties.

Le procédé comprend alors une étape de détermination d'un inverse multiplicatif et une étape de détermination d'un inverse intermédiaire, respectivement identiques à l'étape de détermination d'un inverse multiplicatif (étape S8) et à l'étape de détermination d'un inverse intermédiaire (étape S10) décrites en référence à la figure 3.

Le procédé comprend alors une étape de changement de masque (étape S111), pendant laquelle le processeur 4 remplace un masquage multiplicatif du module donné par un masquage additif sur les entiers.

Pendant cette étape de changement de masque (étape S111), le processeur 4 détermine des troisièmes parties $E'_1, E'_2$ d'un masquage préliminaire du module donné à partir des premières parties du masquage initial dudit module donné ou à partir de l'autre module masqué et du premier masque multiplicatif. Le masquage préliminaire est ici un masquage additif sur les entiers.

Par exemple, le processeur 4 tire un troisième autre aléa en tant que troisième partie $E'_2$, uniformément dans un intervalle fermé ayant une borne inférieure de valeur 0 et une borne supérieure de valeur $2^p - 1$, puis le processeur 4 calcule la troisième partie $E'_1$ comme suit : $E'_1 = (P_{(R)} - E'_2 \cdot R)/R$.

Selon un autre exemple, le processeur 4 tire un troisième autre aléa en tant que troisième partie $E'_2$, uniformément dans un intervalle fermé ayant une borne inférieure de valeur 0 et une borne supérieure de valeur $2^p - 1$, puis le processeur 4 calcule la troisième partie $E'_1$ comme suit : $E'_1 = (P_1 - E'_2 \cdot P_2)/P_2$.

Le procédé comprend alors une étape de détermination de deuxièmes parties d'un masquage additif modulaire d'un dividende (étape S112), pendant laquelle le processeur 4 détermine des deuxièmes parties d'un masquage additif modulaire d'un dividende, le dividende ayant pour valeur $(-D \cdot P + 1) \bmod N$ avec N un module public de valeur égale à $P \cdot Q$, et la détermination de chaque deuxième partie comprenant la détermination d'un produit de l'inverse intermédiaire et d'une troisième partie distincte d'un même masquage préliminaire du module donné, c'est à dire du masquage préliminaire du module donné.

Typiquement, tout i allant de 1 à n, le processeur 4 calcule une deuxième partie $T_i$ d'un masquage additif modulaire d'un dividende T comme suit : $T_i = -D \cdot E'_i + H_i$ $\bmod N$ tel que $\sum_{i=1}^{n} H_i \bmod N = 1$. La détermination de chaque deuxième partie $T_i$ comprend donc la détermination d'un produit $D \cdot E'_i$ de l'inverse intermédiaire D et d'une troisième partie distincte $E'_i$ d'un même masquage préliminaire du module donné P, c'est-à-dire du masquage préliminaire du module donné P.

De préférence, pour une et une seule valeur de

i, $H_i$ vaut 1 et pour les autres valeurs de i, $H_i$ est nul. Dans ce cas, la détermination d'une et une seule deuxième partie du dividende masqué comprend en outre une augmentation de 1 du produit déterminé modulo le module public.

Le procédé est ainsi plus performant car il limite les opérations nécessaires à la détermination du dividende.

Le module public N peut avoir été enregistré dans une mémoire du dispositif électronique 2 lors d'une phase de fonctionnement du dispositif électronique 2 antérieure au procédé décrit ici.

Si le module public N n'est pas disponible, le procédé peut calculer le module public à partir du module donné et du nombre.

Selon un premier exemple, le processeur 4 calcule le module public N comme suit : $N = (P_1 \cdot Q_{(S)})/(P_2 \cdot S)$. Le calcul de $P_1 \cdot Q_{(S)}$ et $P_2 \cdot S$ avant d'effectuer la division, permet de préserver la confidentialité du module donné P et du nombre Q.

Selon un deuxième exemple, le processeur 4 calcule le module public N comme suit : $Z = \sum_{i=1}^{2} \left( E'_i \cdot Q_{(S)} \right)$ puis $N = Z/S$ avec Z un résultat intermédiaire. Sommer des produits $E'_i \cdot Q_{(S)}$, i allant de 1 à 2, permet de préserver la confidentialité du module donné P. En outre, la division par le deuxième masque multiplicatif S porte sur le résultat de cette somme, ce qui permet de préserver la confidentialité du nombre Q.

Selon un troisième exemple, le processeur 4 calcule le module public N comme suit : $N = (P_{(R)} \cdot Q_{(S)})/(R \cdot S)$. Le calcul de $P_{(R)} \cdot Q_{(s)}$ et $R \cdot S$ avant d'effectuer la division, permet de préserver la confidentialité du module donné P et du nombre Q.

Selon un quatrième exemple, si le nombre Q est masqué sous la forme de 2 quatrièmes parties d'un masquage multiplicatif, les quatrièmes parties ayant préalablement été déterminées puis mémorisées dans l'entité de mémorisation 6, le processeur 4 calcule le module public N comme suit : $N = (P_1 \cdot Q_1)/(P_2 \cdot Q_2)$. Le calcul de $P_1 \cdot Q_1$ et $P_2 \cdot Q_2$ avant d'effectuer la division, permet de préserver la confidentialité du module donné P et du nombre Q.

Selon un cinquième exemple, toujours si le nombre Q est masqué sous la forme de 2 quatrièmes parties d'un masquage multiplicatif, le processeur 4 peut calculer le module public N comme suit : $Z = \sum_{i=1}^{2} (E'_i \cdot Q_1)$ puis $N = Z/Q_2$ avec Z un résultat intermédiaire. Sommer des produits $E'_i \cdot Q_1$, i allant de 1 à 2, permet de préserver la confidentialité du module donné P. En outre, la division par la quatrième partie $Q_2$ porte sur le résultat de cette somme, ce qui permet de préserver la confidentialité du nombre Q.

Selon un sixième exemple, toujours si le nombre Q est masqué sous la forme de 2 quatrièmes parties d'un masquage multiplicatif, le processeur 4 peut calculer le module public N comme suit : $N = (P_{(R)} \cdot Q_1)/(R \cdot Q_2)$.

Le calcul de $P_{(R)} \cdot Q_1$ et $R \cdot Q_2$ avant d'effectuer la division, permet de préserver la confidentialité du module donné P et du nombre Q.

Le procédé comprend alors une étape de calcul de la division exacte du dividende par le nombre identique à l'étape de calcul de la division exacte du dividende par le nombre (étape S14) décrite en référence à la figure 3.

On notera que si l'étape de calcul de la division exacte du dividende par le nombre est selon le deuxième mode de réalisation décrit en référence à la figure 5, le procédé de la figure 7 peut comprendre une étape additionnelle (non représentée) pendant laquelle le processeur 4 remplace un masquage multiplicatif du nombre par un masquage additif. Cette étape peut être réalisée de façon similaire à ce qui a été décrit pour l'étape de changement de masque (étape S111).

Ainsi, le procédé décrit en référence à la figure 7 ne nécessite pas l'implémentation sous forme masquée des opérations de réduction modulaire et d'inversion modulaire. A la place, le procédé permet d'utiliser l'implémentation sous forme masquée d'une division exacte.

Un homme du métier comprendra que les étapes du procédé de détermination d'un inverse modulaire décrit en référence à la figure 7, peuvent être exécutées selon d'autres ordres dans la mesure où chaque étape dispose des éléments nécessaires à son exécution.

Selon un premier exemple, l'étape de détermination d'un nombre masqué (étape S106) peut être exécutée avant l'étape de détermination d'un autre module masqué (étape S104) et après l'étape de détermination de masques multiplicatifs (étape S2).

Selon un deuxième exemple, l'étape de détermination d'un inverse multiplicatif (étape S8) peut être exécutée avant l'étape de détermination d'un nombre masqué (étape S106) et après l'étape de détermination d'un autre module masqué (étape S104).

Selon un troisième exemple, l'étape de changement de masque (étape S111) peut être exécutée avant l'étape de détermination d'un nombre masqué (étape S106) et après l'étape de détermination d'un autre module masqué (étape S104), ou avant une étape parmi l'étape de détermination de masques multiplicatifs (étape S2) et l'étape de détermination d'un autre module masqué (étape S104).

Le procédé de détermination d'un inverse modulaire décrit en référence à la figure 7 peut être adapté à des masquages multiplicatif à n partages, n étant supérieur ou égale à 3.

La figure 8 illustre sous forme de logigramme les étapes principales d'un procédé de détermination d'un inverse modulaire selon un quatrième mode de réalisation de l'invention.

Le procédé de la figure 8 vise aussi à déterminer l'inverse modulaire d'un nombre Q dans l'anneau des entiers modulo un module donné P, le nombre et le module donné étant des nombres premiers, et le module donné étant masqué sous la forme de n premières parties $P_1, ... , P_n$ d'un masquage initial avec n un entier strictement supérieur à un.

La tailles du module donné P est de p bits et la taille du nombre Q est de q bits. Par exemple p a pour valeur 1024 et q a aussi pour valeur 1024. On notera cependant que p peut avoir une valeur différente de celle de q.

Le masquage initial est ici un masquage multiplicatif modulaire de module $2^{p'}$ à deux partages, avec p' un entier supérieur ou égale à p. L'entier n a donc ici pour valeur 2.

Selon une étape de changement de masque (étape S100), le processeur 4 remplace le masquage multiplicatif modulaire de module $2^{p'}$ du module donné par un masquage additif sur les entiers.

Typiquement, le processeur 4 commence par remplacer le masquage multiplicatif modulaire de module $2^{p'}$ du module donné par un masquage additif modulaire de module $2^{p'}$.

Pour cela, le processeur 4 tire un aléa intermédiaire R' uniformément dans un intervalle fermé ayant une borne inférieure de valeur 0 et une borne supérieure de valeur $2^{p'} - 1$, puis le processeur 4 calcule une troisième donnée intermédiaire Z' comme suit : $Z' = P_2^{-1} \bmod 2^{p'}$. Ensuite le processeur 4 calcule deux parties intermédiaires $P'_1, P'_2$ comme suite : $P'_1 = (P_1 - R') \cdot Z' \bmod 2^{p'}$ et $P'_2 = R' \cdot Z' \bmod 2^{p'}$.

Les deux parties intermédiaires $P'_1, P'_2$ sont le module donné masqué sous la forme du masquage additif modulaire de module $2^{p'}$.

Le processeur 4 poursuit alors en remplaçant le masquage additif modulaire de module $2^{p'}$ du module donné par le masquage additif sur les entiers.

Pour cela, le processeur 4 tire un troisième autre aléa $E'_2$ uniformément dans un intervalle fermé ayant une borne inférieure de valeur 0 et une borne supérieure de valeur $2^p - 1$, puis le processeur 4 calcule une première autre donnée $E'_1$ comme suit $E'_1 = P'_1 - E'_2$. Puis, le processeur 4 met à jour la première autre donnée $E'_1$ comme suit : $E'_1 = E'_1 + P'_2$. Pour finir, si $P'_1 + P'_2$ est une valeur strictement inférieure à $2^{p'}$, le processeur 4 met à jour la première autre donnée comme suit : $E'_1 = E'_1 - 2^{p'}$. Ensuite, pour tout i allant de 1 à 2, le processeur 4 met à jour une première partie comme suit : $P_i = E'_i$.

Retrancher au moins le troisième autre aléa $E'_2$ à la partie intermédiaire $P'_1$ avant d'ajouter à la première autre donnée $E'_1$ la partie intermédiaire $P'_2$, permet de préserver la confidentialité du module donné.

La comparaison de $P'_1 + P'_2$ et $2^{p'}$ est faite de manière sécurisée, par exemple selon le mode de réalisation décrit ci-avant en référence à la figure 2.

A la fin de l'étape de changement de masque (étape S100), les premières parties sont la forme masquée du module donné selon un masquage additif sur les entiers.

Le procédé comprend alors une étape de détermination de masques multiplicatifs, une étape de détermination d'un autre module masqué, une étape de détermination d'un nombre masqué, une étape de détermination d'un inverse multiplicatif, une étape de détermination d'un inverse intermédiaire, une étape de détermination de deuxièmes parties d'un masquage additif modulaire d'un dividende et une étape de calcul de la division exacte du dividende par le nombre, respectivement identiques à l'étape de détermination de masques multiplicatifs (étape S2), à l'étape de détermination d'un autre module masqué (étape S4), à l'étape de détermination d'un nombre masqué (étape S6), à l'étape de détermination d'un inverse multiplicatif (étape S8), à l'étape de détermination d'un inverse intermédiaire (étape S10), à l'étape de détermination de deuxièmes parties d'un masquage additif modulaire d'un dividende (étape S12) et à l'étape de calcul de la division exacte du dividende par le nombre (étape S14) décrites ci-avant en référence à la figure 3.

Si le nombre Q est masqué sous la forme de quatrièmes parties d'un autre masquage initial, le procédé de la figure 8 peut comprendre en outre une autre étape de changement de masque (non représentée), pendant laquelle le processeur 4 remplace l'autre masquage initial par un masquage additif sur les entiers.

Par exemple, si l'autre masquage initial étant un masquage multiplicatif modulaire de module $2^{q'}$ avec q' un entier supérieur ou égale à q, le procédé de la figure 8 peut comprendre en outre une autre étape de changement de masque (non représentée), pendant laquelle le processeur 4 remplace le masquage multiplicatif modulaire de module $2^{q'}$ du nombre par un masquage additif sur les entiers.

Typiquement, le processeur 4 commence par remplacer le masquage multiplicatif modulaire de module $2^{q'}$ du nombre par un masquage additif modulaire de module $2^{q'}$,

Pour cela, le processeur 4 tire un autre aléa intermédiaire R" uniformément dans un intervalle fermé ayant une borne inférieure de valeur 0 et une borne supérieure de valeur $2^{q'} - 1$, puis le processeur 4 calcule une quatrième donnée intermédiaire Z" comme suit : $Z" = Q_2^{-1} \bmod 2^{q'}$. Ensuite le processeur 4 calcule deux autres parties intermédiaires $Q'_1, Q'_2$ comme suite : $Q'_1 = (Q_1 - R") \cdot Z" \bmod 2^{q'}$ et $Q'_2 = R" \cdot Z" \bmod 2^{q'}$.

Les deux autres parties intermédiaires $Q'_1, Q'_2$ sont le nombre masqué sous la forme du masquage additif modulaire de module $2^{q'}$.

Le processeur 4 poursuit alors en remplaçant le masquage additif modulaire de module $2^{q'}$ du nombre par le masquage additif sur les entiers.

Typiquement, le processeur 4 tire un cinquième aléas $E"_2$ uniformément dans un intervalle fermé ayant une borne inférieure de valeur 0 et une borne supérieure de valeur $2^q - 1$, puis le processeur 4 calcule une deuxième autre donnée $E"_1$ comme suit : $E"_1 = Q'_1 - E"_2$. Puis le processeur 4 met à jour la deuxième autre donnée $E"_1$ comme suit : $E"_1 = E"_1 + Q'_2$. Pour finir, si $Q'_1 + Q'_2$ est une valeur strictement inférieure à $2^{q'}$, le processeur 4 met à jour la deuxième autre donnée comme suit : $E"_1 = E"_1 -$

$2^{q'}$. Ensuite, pour tout i allant de 1 à 2, le processeur 4 met à jour une quatrième partie comme suit : $Q_i = E"_i$.

Retrancher au moins le cinquième aléa $E"_2$ à l'autre partie intermédiaire $Q'_1$ avant d'ajouter à la deuxième autre donnée $E"_1$ l'autre partie intermédiaire $Q'_2$, permet de préserver la confidentialité du nombre.

La comparaison de $Q'_1 + Q'_2$ et $2^{q'}$ est faite de manière sécurisée, par exemple selon le mode de réalisation décrit ci-avant en référence à la figure 2.

A la fin de l'autre étape de changement de masque, les quatrièmes parties sont la forme masquée du nombre selon un masquage additif sur les entiers.

L'autre étape de changement de masque est exécutée au sein du procédé avant qu'une autre étape dudit procédé ait besoin des quatrièmes parties du nombre.

Par exemple, l'autre étape de changement de masque est exécutée avant l'étape de détermination d'un nombre masqué (étape S6), et/ou avant l'étape de détermination de deuxièmes parties d'un masquage additif modulaire d'un dividende (étape S12), et/ou avant l'étape de calcul de la division exacte du dividende par le nombre (étape S14).

Ainsi, le procédé décrit en référence à la figure 8 ne nécessite pas l'implémentation sous forme masquée des opérations de réduction modulaire et d'inversion modulaire. A la place, le procédé permet d'utiliser l'implémentation sous forme masquée d'une division exacte.

Un homme du métier comprendra que les étapes du procédé de détermination d'un inverse modulaire décrit en référence à la figure 8, peuvent être exécutées selon d'autres ordres dans la mesure où chaque étape dispose des éléments nécessaires à son exécution.

Selon un premier exemple, l'étape de détermination d'un nombre masqué (étape S6) peut être exécutée avant l'étape de détermination d'un autre module masqué (étape S4) et après l'étape de détermination de masques multiplicatifs (étape S2).

Selon un deuxième exemple, l'étape de détermination d'un inverse multiplicatif (étape S8) peut être exécutée avant l'étape de détermination d'un nombre masqué (étape S6) et après l'étape de détermination d'un autre module masqué (étape S4).

Selon un troisième exemple, l'étape de changement de masque (étape S100) peut être exécutée avant l'étape de détermination d'un autre module masqué (étape S4) et après l'étape de détermination de masques multiplicatifs (étape S2).

Le procédé de détermination d'un inverse modulaire décrit en référence à la figure 8 peut être adapté à des masquages multiplicatif modulaire à n partages, n étant supérieur ou égale à 3.

Le dispositif électronique 2 peut mettre en œuvre un procédé de génération d'une clé RSA CRT comprenant un procédé tel que décrit ci-avant. Typiquement, le dispositif électronique 2 peut mettre en œuvre un procédé de génération d'une clé RSA CRT comprenant un inverse modulaire déterminé par un procédé tel que décrit ci-avant, notamment en référence à une figure parmi les figures 3, 6, 7 et 8.

**Revendications**

1. Procédé de détermination d'un inverse modulaire d'un nombre Q dans l'anneau des entiers modulo un module donné P, le nombre et le module donné étant des nombres premiers, le module donné étant masqué sous la forme de premières parties d'un masquage initial, le procédé étant mis en œuvre par un dispositif électronique (2) et le procédé comprenant les étapes suivantes :

   - Détermination (S2), de préférence par tirage aléatoire, d'un premier masque multiplicatif et d'un deuxième masque multiplicatif non nuls et premiers entre eux,
   - Détermination (S4,S104) d'un autre module masqué par application du premier masque multiplicatif au module donné P,
   - Détermination (S6,S106) d'un nombre masqué égal au produit du deuxième masque multiplicatif et du nombre Q,
   - Détermination (S8) d'un inverse multiplicatif de l'autre module masqué puis détermination (S10) d'un inverse intermédiaire D résultat d'une multiplication de l'inverse multiplicatif de l'autre module masqué par le premier masque multiplicatif modulo le nombre masqué,
   - Détermination (S12,S112) de deuxièmes parties d'un masquage additif modulaire d'un dividende, le dividende ayant pour valeur (-D · P + 1) mod N avec N un module public de valeur égale à P · Q, et la détermination de chaque deuxième partie comprenant la détermination d'un produit de l'inverse intermédiaire et d'une troisième partie distincte d'un même masquage préliminaire du module donné,
   - Calcul (S14) de la division exacte du dividende par le nombre, l'inverse modulaire étant le résultat de la division exacte, le dividende, l'inverse modulaire et le nombre étant manipulés sous forme masquée.

2. Procédé selon la revendication précédente dans lequel le masquage initial est un masquage pami un masquage additif, un masquage additif modulaire, un masquage multiplicatif et un masquage multiplicatif modulaire.

3. Procédé selon l'une quelconque des revendications précédentes dans lequel le masquage préliminaire est un masquage additif.

4. Procédé selon l'une quelconque des revendications précédentes dans lequel les troisièmes parties sont les premières parties.

5. Procédé selon l'une quelconque des revendications précédentes dans lequel la détermination d'une et une seule deuxième partie du dividende masqué comprend en outre une augmentation de 1 du produit déterminé modulo le module public.

6. Procédé selon l'une quelconque des revendications précédentes dans lequel la division exacte comprend le remplacement (SS2) du masquage additif modulaire du dividende par un masquage additif.

7. Procédé selon l'une quelconque des revendications précédentes dans lequel le calcul de la division exacte manipule le nombre masqué et le deuxième masque multiplicatif, le deuxième masque multiplicatif étant impair.

8. Procédé selon l'une quelconque des revendications précédentes comprenant en outre le calcul du module public à partir du module donné et du nombre.

9. Procédé de génération d'une clé RSA CRT comprenant un procédé selon l'une des revendications précédentes.

10. Programme d'ordinateur comprenant des instructions exécutables par un processeur et adaptées à mettre en œuvre un procédé selon l'une quelconque des revendications précédentes, lorsque ces instructions sont exécutées par le processeur.

11. Dispositif électronique de détermination d'un inverse modulaire d'un nombre Q dans l'anneau des entiers modulo un module donné P, le nombre et le module donné étant des nombres premiers, le module donné étant masqué sous la forme de premières parties d'un masquage initial, et le dispositif électronique comprenant :

   - un bloc de détermination de masques multiplicatifs configuré pour déterminer, de préférence par tirage aléatoire, un premier masque multiplicatif et un deuxième masque multiplicatif non nuls et premiers entre eux,
   - un bloc de détermination d'un autre module masqué configuré pour déterminer un autre module masqué par application du premier masque multiplicatif au module donné P,
   - un bloc de détermination d'un nombre masqué configuré pour déterminer un nombre masqué égal au produit du deuxième masque multiplicatif et du nombre Q,
   - un bloc d'inversion configuré pour déterminer un inverse multiplicatif de l'autre module masqué puis déterminer un inverse intermédiaire D résultat d'une multiplication de l'inverse multiplicatif de l'autre module masqué par le premier masque multiplicatif modulo le nombre masqué,
- un bloc de détermination d'un dividende configuré pour déterminer des deuxièmes parties d'un masquage additif modulaire d'un dividende, le dividende ayant pour valeur (-D · P + 1) mod N avec N un module public de valeur égale à P · Q, et la détermination de chaque deuxième partie comprenant la détermination d'un produit de l'inverse intermédiaire et d'une troisième partie distincte d'un même masquage préliminaire du module donné,
- un bloc de division exacte configuré pour calculer la division exacte du dividende par le nombre, l'inverse modulaire étant le résultat de la division exacte, le dividende, l'inverse modulaire et le nombre étant manipulés sous forme masquée.

**Patentansprüche**

1. Verfahren zur Bestimmung einer modularen Inversen einer Zahl Q in dem Ring der ganzen Zahlen modulo einem gegebenen Modul P, wobei die Zahl und das gegebene Modul Primzahlen sind, wobei das gegebene Modul in Form von ersten Teilen einer anfänglichen Maskierung maskiert ist, wobei das Verfahren von einer elektronischen Vorrichtung (2) ausgeführt wird und wobei das Verfahren die folgenden Schritte umfasst:

   - Bestimmen (S2), vorzugsweise durch Zufallsauswahl, einer ersten multiplikativen Maske und einer zweiten multiplikativen Maske, die ungleich null und zueinander teilerfremd sind,
   - Bestimmen (S4, S104) eines anderen maskierten Moduls durch Anwenden der ersten multiplikativen Maske auf das gegebene Modul P,
   - Bestimmen (S6, S106) einer maskierten Zahl, die gleich dem Produkt aus der zweiten multiplikativen Maske und der Zahl Q ist,
   - Bestimmen (S8) einer multiplikativen Inversen des anderen maskierten Moduls, dann Bestimmen (S10) einer Zwischeninversen D, die das Ergebnis einer Multiplikation der multiplikativen Inversen des anderen maskierten Modul mit der ersten multiplikativen Maske modulo der maskieren Zahl ist,
   - Bestimmen (S12, S112) von zweiten Teilen einer modularen additiven Maskierung eines Dividenden, wobei der Dividend den Wert (-D · P + 1) mod N hat, wobei N ein öffentliches Modul mit einem Wert gleich P · Q ist, und wobei das Bestimmen jedes zweiten Teils das Bestimmen eines Produkts aus der Zwischeninversen und einem dritten Teil, der sich von einer selben vorläufigen Maskierung des gegebenen Moduls unterscheidet, ist,
   - Berechnen (S14) der exakten Division des Dividenden durch die Zahl, wobei die modulare Inverse das Ergebnis der exakten Division ist, wobei der Dividend, die modulare Inverse und die Zahl in maskierter Form verarbeitet werden.

2. Verfahren nach dem vorhergehenden Anspruch, wobei die anfängliche Maskierung eine Maskierung unter einer additiven Maskierung, einer modularen additiven Maskierung, einer multiplikativen Maskierung und einer modularen multiplikativen Maskierung ist.

3. Verfahren nach einem der vorhergehenden Ansprüche, wobei die vorläufige Maskierung eine additive Maskierung ist.

4. Verfahren nach einem der vorhergehenden Ansprüche, wobei die dritten Teile die ersten Teile sind.

5. Verfahren nach einem der vorhergehenden Ansprüche, wobei das Bestimmen eines und nur eines zweiten Teil des maskierten Dividenden weiterhin eine Erhöhung um 1 des bestimmten Produkts modulo des öffentlichen Moduls umfasst.

6. Verfahren nach einem der vorhergehenden Ansprüche, wobei die exakte Division das Ersetzen (SS2) der modularen additiven Maskierung des Dividenden durch eine additive Maskierung umfasst.

7. Verfahren nach einem der vorhergehenden Ansprüche, wobei das Berechnen der exakten Division die maskierte Zahl und die zweite multiplikative Maske verarbeitet, wobei die zweite multiplikative Maske ungerade ist.

8. Verfahren nach einem der vorhergehenden Ansprüche, umfassend ferner das Berechnen des öffentlichen Moduls ausgehend von dem gegebenen Modul und der Zahl.

9. Verfahren zum Erzeugen eines CRT-RSA-Schlüssels, umfassend ein Verfahren nach einem der vorhergehenden Ansprüche.

10. Computerprogramm, das Anweisungen umfasst, die durch einen Prozessor ausführbar sind und geeignet sind, ein Verfahren nach einem der vorhergehenden Ansprüche durchzuführen, wenn diese Anweisungen durch den Prozessor ausgeführt werden.

11. Elektronische Vorrichtung zur Bestimmung einer modularen Inversen einer Zahl Q in dem Ring der ganzen Zahlen modulo einem gegebenen Modul P, wobei die Zahl und das gegebene Modul Primzahlen sind, wobei das gegebene Modul in Form von ersten Teilen einer anfänglichen Maskierung maskiert ist, und wobei die elektronische Vorrichtung umfasst:

- einen Block zum Bestimmen von multiplikativen Masken, der dazu ausgestaltet ist, vorzugsweise durch Zufallsauswahl, eine erste multiplikative Maske und eine zweite multiplikative Maske, die ungleich null und zueinander teilerfremd sind, zu bestimmen,
- einen Block zum Bestimmen eines anderen maskierten Moduls, das dazu ausgestaltet ist, ein anderes maskiertes Modul durch Anwenden der ersten multiplikativen Maske auf das gegebene Modul P zu bestimmen,
- einen Block zum Bestimmen einer maskierten Zahl, der dazu ausgestaltet ist, eine maskierte Zahl gleich dem Produkt aus der zweiten multiplikativen Maske und der Zahl Q zu bestimmen;
- einen Inversionsblock, der dazu ausgestaltet ist, eine multiplikative Inverse des anderen maskierten Moduls bestimmen, dann eine Zwischeninverse D zu bestimmen, die das Ergebnis einer Multiplikation der multiplikativen Inversen des anderen maskierten Modul mit der ersten multiplikativen Maske modulo der maskieren Zahl ist,
- einen Block zum Bestimmen eines Dividenden, der dazu ausgestaltet ist, zweite Teile einer modularen additiven Maskierung eines Dividenden zu bestimmen, wobei der Dividend den Wert (-D · P + 1) mod N hat, wobei N ein öffentliches Modul mit einem Wert gleich P · Q ist, und wobei das Bestimmen jedes zweiten Teils das Bestimmen eines Produkts aus der Zwischeninversen und einem dritten Teil, der sich von einer selben vorläufigen Maskierung des gegebenen Moduls unterscheidet, ist,
- einen Block zur exakten Division, der dazu ausgestaltet ist, die exakte Division des Dividenden durch die Zahl zu berechnen, wobei die modulare Inverse das Ergebnis der exakten Division ist, wobei der Dividend, die modulare Inverse und die Zahl in maskierter Form verarbeitet werden.

## Claims

1. Method for determining a modular inverse of a number Q in the ring of integers modulo a given modulus P, the number and the given modulus being prime numbers, the given modulus being masked in the form of first parts of an initial masking, the method being implemented by an electronic device (2) and the method comprising the following steps:

   - determining (S2), preferably by random selection, a first multiplicative mask and a second multiplicative mask which are non-zero and coprime,
   - determining (S4, S104) another masked modulus by applying the first multiplicative mask to the given modulus P,
   - determining (S6, S106) a masked number equal to the product of the second multiplicative mask and of the number Q,
   - determining (S8) a multiplicative inverse of the other masked modulus then determining (S10) an intermediate inverse D resulting from a multiplication of the multiplicative inverse of the other masked modulus by the first multiplicative mask modulo the masked number,
   - determining (S12, S112) second parts of a modular additive masking of a dividend, the dividend having the value (-D · P + 1) mod N where N is a public modulus of value equal to P · Q, and the determination of each second part comprising determining a product of the intermediate inverse and of a distinct third part of a same preliminary masking of the given modulus,
   - calculating (S14) the exact division of the dividend by the number, the modular inverse being the result of the exact division, with the dividend, the modular inverse and the number being manipulated in masked form.

2. Method according to the preceding claim, wherein the initial masking is a masking from among an additive masking, a modular additive masking, a multiplicative masking and a modular multiplicative masking.

3. Method according to either one of the preceding claims, wherein the preliminary masking is an additive masking.

4. Method according to any one of the preceding claims, wherein the third parts are the first parts.

5. Method according to any one of the preceding claims, wherein the determination of one and only one second part of the masked dividend further comprises increasing the determined product modulo the public modulus by 1.

6. Method according to any one of the preceding claims, wherein the exact division comprises replacing (SS2) the modular additive masking of the dividend with an additive masking.

7. Method according to any one of the preceding claims, wherein the calculation of the exact division manipulates the masked number and the second multiplicative mask, the second multiplicative mask being odd.

8. Method according to any one of the preceding claims, further comprising calculating the public modulus from the given modulus and the number.

9. Method for generating an RSA CRT key, comprising a method according to one of the preceding claims.

10. Computer program comprising instructions which are able to be executed by a processor and are designed to implement a method according to any one of the preceding claims when these instructions are executed by the processor.

11. Electronic device for determining a modular inverse of a number Q in the ring of integers modulo a given modulus P, the number and the given modulus being prime numbers, the given modulus being masked in the form of first parts of an initial masking, and the electronic device comprising:

> - a block for determining multiplicative masks, configured to determine, preferably by random selection, a first multiplicative mask and a second multiplicative mask which are non-zero and coprime,
> - a block for determining another masked modulus, configured to determine another masked modulus by applying the first multiplicative mask to the given modulus P,
> - a block for determining a masked number, configured to determine a masked number equal to the product of the second multiplicative mask and of the number Q,
> - an inversion block configured to determine a multiplicative inverse of the other masked modulus then determine an intermediate inverse D resulting from a multiplication of the multiplicative inverse of the other masked modulus by the first multiplicative mask modulo the masked number,
> - a block for determining a dividend, configured to determine second parts of a modular additive masking of a dividend, the dividend having the value $(-D \cdot P + 1) \bmod N$ where N is a public modulus of value equal to $P \cdot Q$, and the determination of each second part comprising determining a product of the intermediate inverse and of a distinct third part of a same preliminary masking of the given modulus,
> - an exact division block configured to calculate the exact division of the dividend by the number, the modular inverse being the result of the exact division, with the dividend, the modular inverse and the number being manipulated in masked form.

Figure 1

Figure 2

```
┌──────────┐
│    S2    │
└────┬─────┘
     ▼
┌──────────┐
│    S4    │
└────┬─────┘
     ▼
┌──────────┐
│    S6    │
└────┬─────┘
     ▼
┌──────────┐
│    S8    │
└────┬─────┘
     ▼
┌──────────┐
│   S10    │
└────┬─────┘
     ▼
┌──────────┐
│   S12    │
└────┬─────┘
     ▼
┌──────────┐
│   S14    │
└──────────┘
```

## Figure 3

```
┌──────────┐
│   SS2    │
└────┬─────┘
     ▼
┌──────────┐
│   SS4    │
└────┬─────┘
     ▼
┌──────────┐
│   SS6    │
└────┬─────┘
     ▼
┌──────────┐
│   SS8    │
└────┬─────┘
     ▼
┌──────────┐
│  SS10    │◄──────┐
└────┬─────┘       │
     ▼             │
┌──────────┐       │
│  SS12    │◄──┐   │
└────┬─────┘   │   │
     ▼      ┌──┴───┴──┐
┌──────────┐│  SS20   │
│  SS14    │└────▲────┘
└────┬─────┘     │
     ▼      ┌────┴────┐
┌──────────┐│  SS22   │
│  SS16    │└────▲────┘
└────┬─────┘     │
     ▼           │
┌──────────┐     │
│  SS18    │─────┘
└──────────┘
```

## Figure 4

Figure 5

| S0 |
|:--:|
| S2 |
| S4 |
| S6 |
| S8 |
| S10 |
| S12 |
| S14 |

Figure 6

| S2 |
|:--:|
| S104 |
| S106 |
| S8 |
| S10 |
| S111 |
| S112 |
| S14 |

Figure 7

| S100 |
|:--:|
| S2 |
| S4 |
| S6 |
| S8 |
| S10 |
| S12 |
| S14 |

Figure 8

## RÉFÉRENCES CITÉES DANS LA DESCRIPTION

**Documents brevets cités dans la description**

- WO 2019079048 A1

**Littérature non-brevet citée dans la description**

- Tudor Jebelean: An Algorithm for Exact Division. *J. Symb. Comput.*, 1993, vol. 15 (2), 169-180